Europäisches Patentamt

**European Patent Office**

Office européen des brevets

(19)

(11)    **EP 1 322 089 A2**

(12)    **EUROPÄISCHE PATENTANMELDUNG**

(43) Veröffentlichungstag:
   **25.06.2003 Patentblatt 2003/26**

(51) Int Cl.[7]: **H04L 29/06**, H04L 12/28

(21) Anmeldenummer: **02028403.0**

(22) Anmeldetag: **18.12.2002**

(84) Benannte Vertragsstaaten:
   **AT BE BG CH CY CZ DE DK EE ES FI FR GB GR
   IE IT LI LU MC NL PT SE SI SK TR**
   Benannte Erstreckungsstaaten:
   **AL LT LV MK RO**

(30) Priorität: **19.12.2001 EP 01130134**

(71) Anmelder: **Assimakopoulos, Theodoros
   13357 Berlin (DE)**

(72) Erfinder: **Assimakopoulos, Theodoros
   13357 Berlin (DE)**

(74) Vertreter: **Springorum, Harald, Dr.
   Kiani & Springorum,
   Patent- und Rechtsanwälte,
   Heinrich-Heine-Allee 29
   40213 Düsseldorf (DE)**

(54)    **Vorrichtungen und System zur dynamischen Protokollanbindung von drahtlosen mobilen
   Stationen an Internet-Protokoll-Netzwerke**

(57)    Kommunikationssystem (**SOCKLETS-System**) zur Anbindung von Mobilen Stationen (**MS**) an Internet-Protokoll Partner (**CH**), welches zumindest eine Mobile Station (**MS**) zur Kommunikation mit einem Internet-Protokoll Partner (**CH**), die zur unmittelbaren Kommunikation über ein drahtloses Zugangsnetz mit einer Protokoll Relais Station (**MARC**) eingerichtet ist, über die sie die dann die mittelbare Kommunikation über ein Internet-Protokoll-Netz, vorzugsweise das öffentlich zugängliche Internet, mit dem Internet-Protokoll Partner (**CH**) führt, wobei die Mobile Station (**MS**) mit mindestens einem Protokollobjekt während des Betriebes dynamisch geladen werden kann und zumindest eine Protokoll Relais Station (**MARC**) zur Kommunikation mit einer Mobilen Station (**MS**) über ein drahtloses Zugangsnetz einerseits und mit einem Internet-Protokoll Partner (**CH**) andererseits, wobei sie das Zugangsnetzprotokoll zur Kommunikation über das drahtlose Zugangsnetz in das Internet-Protokoll und umgekehrt das Internet-Protokoll in das Zugangsnetzprotokoll umsetzt aufweist.

FIG. 5

**Beschreibung**

Die vorliegende Erfindung betrifft Vorrichtungen und System zur dynamischen Protokollanbindung von drahtlosen Mobilen Stationen an Internet-Protokoll Netzwerke.

Es ist bekannt, daß die Kommunikation zwischen Geräten durch Protokolle geregelt wird. Um die Designkomplexität niedrig zu halten und um das Entwickeln von Protokollen in Telekommunikations- und Computernetzwerken zu erleichtern, sind die Protokolle in Schichten unterteilt. Diese Schichten werden funktionell in Stapel organisiert - als Protokollstapel. Die Anzahl der Schichten, ihre Namen, Inhalte und ihre Funktionalität sind oft unterschiedlich für die unterschiedliche Netzwerkarchitekturen. Allen Netzwerkprotokollen ist gemeinsam, daß jede Schicht als Diensterbringer für die darüberliegenden und als Dienstnehmer für die darunterliegende Schicht wirkt - unter der niedrigsten Schicht befindet sich das physikalische Medium. Zwischen zwei aufeinander folgenden Schichten gibt es eine Schnittstelle, die die Operationen und Dienste des Diensterbringers definiert und diese dem Dienstnehmer bekannt macht bzw. bereitstellt. Innerhalb einer Schicht können Unterschichten auftreten.

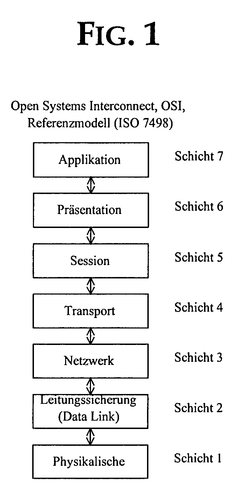

Als Referenzmodell für die meisten Protokollstapel dient das von der International Standards Organization (ISO) definierte siebenschichtige "Open Systems Interconnection" Referenzmodel", kurz OSI (siehe hierzu auch Fig. 1).

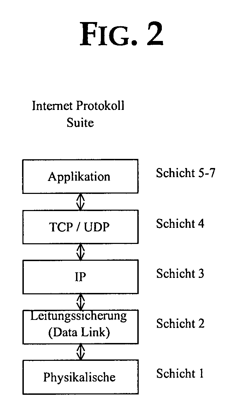

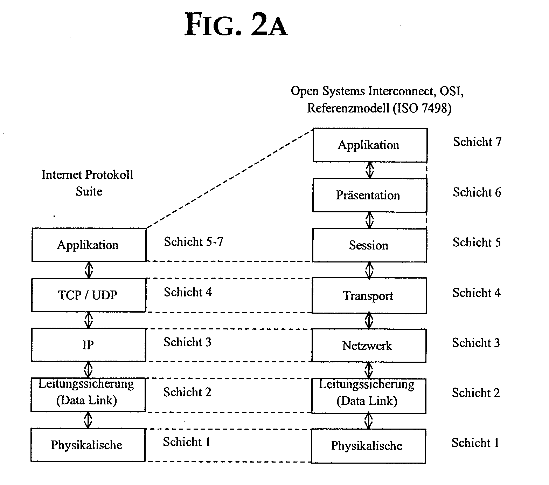

Der weitverbreiteteste Protokollstapel ist der Internet Protokollstapel (siehe hierzu auch Fig. 2), bestehend aus

- einer Netzwerkschicht, genannt "Internet"-, oder kurz IP-Protokoll Schicht, definiert in IETF RFC 791 (Internet Emgineering Task Force Request For Comments 791),

- einer Transport-Schicht mit dem "Transport Control Protocol", kurz TCP, definiert in IETF RFC 793 (Internet Emgineering Task Force Request For Comments 793) und dem "User Datagram Protocol", kurz UDP, definiert in IETF RFC 768 (Internet Emgineering Task Force Request For Comment 768).

Diese Standards werden durch weitere Standards des Internet Engineering Task Force, IETF, verfeinert. Der Internet-Protokollstapel wird oft "TCP/IP" genannt.

Der TCP/IP-Protokollstapel ist unter der Annahme entwickelt worden, daß das physikalische Übetragungsmedium während einer Sitzung sich nicht ändert bzw. immer dasselbe ist, z.B. Kupferkabel, und in seinen Eigenschaften weitgehend stabil bleibt. So ist das TCP/IP für kabelverbundene Netzwerke, die aus sogenannten Fixed-Hosts bestehen, entwickelt worden und berücksichtigt die Eigenschaften nur solcher Übertragungsmedien. TCP ist vom Design her für drahtlose Netzwerke ungeeignet, da sein Korrektur- bzw. seine Sicherungsmechanismen von Stauung (Congestion) und nicht von Fehlern auf dem Übetragungmedium ausgehen. Wegen der hohen Übertragungsfehlerrate in drahtlosen Netzwerken gehen jedoch viele Datenpackete verloren. Das wird vom TCP als Stauung mißverstanden und aktiviert seine Stauungs-Vermeindungs (Congestion Avoidance) Algorithmen. Dies hat dann eine größere Übertragungs-Verzögerung (Delay) und einen niedrigeren Durchsatz zur Folge.

Die Bedeutung mobiler und drahtloser Netzwerke für den Zugriff auf Internet-Dienste nimmt aber ständig zu. Konsumenten benutzen mobile Geräte, die sowohl drahtgebundene als auch drahtlose Übertragunstechnologien untestützten müssen, um mit anderen über das Internet und unter Benutzung des Internet-Protokollstapels zu kommunizieren. TCP nutzt leider die Eigenschaften der drahtlosen Netze nicht optimal und u.U. hat TCP hierbei sogar negative Auswirkungen auf den gesamten Durchsatz. Es sind nicht immer nur langsame drahtlose oder drahtgebundene Netzwerktechnologien, wie GSM (GSM: Groupe Special Mobil) oder Modem-Verbindungen, als Verursacher schlechter Performance auszumachen, sondern auch Internet-Protokollstapel, die die Eigenschaften solcher Übertragungstechnologien nicht berücksichtigen. Viele Mechanismen sind entwickelt worden, um insbesondere TCP an die Eigenschaften der drahtlosen Übertragung, etwa der Funkübertragung, anzupassen. So sind dem Protokoll weitere Optionen und zusätzliche Mechanismen zur Retransmission zugefügt worden, wie z.B. die "Selektive Bestätigung" (Selective ACKnowledgement) (SACK) Option, beschrieben in IETF RFC 2018 und IETF RFC 2883, und der TCP-Eifel Algorithmus (vgl. R. Ludwig, "Eliminating Inefficient Cross-Layer Interactions in Wireless Networking", Dissertation, Technische Hochschule Aachen, Deutschland, April 2000).

Der Zugang von privaten zu öffentlichen und von drahtlosen zu drahtgebundenen Netzwerken findet immer über sogenannte Zugangspunkte (auch Basisstationen oder Access Points genannt), statt, die meist zwei unterschiedliche Übertragungstechnologien verbinden. Sie implementieren die zwei untersten Protokollschichten des OSI-Referenzmodells und somit sind diese Zugangspunkte für TCP, welches ein Protokoll für Punkt-zu-Punkt Verbindungen auf der Transport-Schicht ist, transparent. Diese Heterogenität der Übetragungstechnologien der beteiligten Netzwerke war im Design des TCP nicht vorgesehen. Aufgrund der unterschiedlichen Signallaufzeiten in den heterogenen Netzwerken wird TCP zu einem "Fehlverhalten" verleitet, welches starke Performance-Einbrüche hervorruft. Es sind mehrere Mechanismen vorgeschlagen, die die Eigenschaften des darunterliegenden Übertragungsmedium dem TCP bekannt machen wollen, damit TCP sein Verhalten entsprechend anpaßt. Diese Mechanismen sehen ein Verbindungsaufsplittung der TCP Ende-zu-Ende Verbindung vor, und zwar an der Basisstation. Bekannte Vertreter dieser Methode sind, "Snoop" (vgl. S. Balakrishnan, E. Amir Seshan, und R.H. Katz: "Improving TCP/IP performance over wireless networks", 1st Intl. Mobile Computing and Networking [MOBICOM'95], Berkeley, Nov. 1995), Indirect-TCP (vgl. A.Bakre und B. Badrinath, "I-TCP: Indirect TCP for mobile hosts", Proc. 15th International Conf. on Distributed Computing Systems [ICDCS], May 1995), MTCP (vgl. K.Brown und S. Singh, "M-TCP: TCP for mobile cellular networks", ACM Computer Communications Review, vol. 27, no. 5, 1997).

Zudem führt die Mobilität und der damit verbundene Wechsel zwischen Funkzellen, Handover genannt, durch seine grosse Verzögerungsvarianz (delay variation) und Datenverluste zu falschen Einschäzungen der Zeitgeberwerte in der TCP Zustandsmaschine. Das Ergebnis ist eine drastische Verschlechterung der Performance.

Darüberhinaus ist die Komplexität des TCP/IP Protokollstapels sehr hoch woraus eine sehr ressourcenintensive Aktivität resultiert. Wenn der TCP/IP Stapel eines Gerätes aktiviert wird, dann steigt der Energieverbrauch sehr stark an, mit dem Ergebniss, daß batteriebetriebene Geräte eine stark verkürzte Wirkungszeit im Vergleich zu ihrem TCP/IP-losen Einsatz haben. TCP/IP beansprucht mehr als 60% der Funktionalität eines Protokolstapels und ca. 30%-70% der operativen Ressourcen eine Betriebssystems.

Die internationale "Software Defined Radio" Initiative, SDR (vgl. Software Radio, Special Issue of the IEEE Personal Communications Magazine, Vol. 6 No. 4, Aug. 1999), sieht die Enwicklung von Hardware-unabhängigen Radiotransceivern vor, und zwar mittels extensiver Nutzung von Digitalen Signal Prozessoren, DSPs. SDR-Module sollen sowohl in den mobilen Endgeräten als auch in den Basisstationen implementiert werden. Durch SDR kann die funkbezogene (Radio-)Funktionalität der Geräte modifiziert werden. Dabei werden die untersten zwei Protokollschichten des OSI Referenzmodells beeinflusst, der TCP/IP Protokollstapel bleibt unberührt.

DSPs sind mächtige Hardware-Bausteine, die der Realisierung der SDR-Module dienen, die sie benötigen, um hiermit die aufwendige und Ressourcen-intensive Funktionalität mehrerer Funktechnologien zu gewährleisten.

Sogenannte Protokoll-Booster, (vgl. W.S. Marcus, I. Hadzic, A.J. McAuley, J.M. Smith, Protocol Boosters: Applying Programmability to Network Infrastructures, IEEE Communications Magazine, vol. 36, no. 10, pp. 79-83, 2000), (vgl. I.Hadzic, Applying Reconfigurable Computing to Reconfigurable Networks, PhD, Thesis, 1999), sind Hardware-, seltener Software-Module, die Kommunikationsgeräte mit zusätzliche Funktionalitäten versehen. Sie erhöhen zwar das Angebot an Funktionalitäten am Endgerät, tragen aber nur der Performance-Steigerung in festverdrahteten Netzen bei. Protocol-Booster basieren auf programmierebarer Hardware, FPGA, die zusätzliche Hardware-Programmlogik auf den Endgeräten benötigen und somit zu einer Erhöhung des Energieverbrauchs, des Gewichtes und bei mobilen Geräten auch der Größe beiträgt.

Alle heutige Ansätze gehen, um bessere Performance zu erzielen, von einer "Modifikation" bzw. "Ergänzung" des Gerätes durch Zusätze aus, wobei die benötigten Hard- und/oder Softwareteile für diese Modifikation/Ergänzung schon im Gerät - inaktiv - vorhanden ist. Dies hat zur Folge, daß Speicher- und Energieressourcen dafür bereitgestellt werden müssen, auch wenn diese Zusätze nur äußerst selten benutzt werden.

Auch ist heute ein Hauptziel moderner Systeme die transparente Bereitstellung von Diensten, unabhängig von der darunterliegenden Transporttechnologie (ISDN, GSM, HIPERLAN, IEEE802.11, Bluetooth, usw.). Diese Transparenz und Unabhängigkeit wird heute nur zum Teil erreicht und zwar durch

(a) bedingt rekonfigurierbare Terminals und

(b) programmierbare Netzwerke (Anm.: Adaptive Systeme optimieren oder passen sich automatisch während ihres Betriebes an die Gegebenheiten an. Programmierbare Systeme dagegen sind so entworfen, daß Benutzern ermöglicht wird, durch ein Interface oder durch ein Programmierungsmodell, das Systemverhalten zu ändern).

Im einzelnen:

(a) Rekonfiguration von mobilen, drahtlosen Terminals findet heute auf folgende Ebenen statt:

- Auf Applikationsebene: Hier werden mittels verschiedener Browser, Applikationen geladen und ausgeführt, wie z.B. JAVA - Applets. Diese Art der Rekonfiguration ist für mobile Geräte, wie z.B. Persönliche Digitale Assistenten, PDAs, und mobile Telefone, in dem MExE (MExE: Mobile Station Application Execution Environment, definiert in 3GPP TS 22.057) Vorschlag vorgesehen.

- Auf Netzwerkebene: Eine sehr eingeschränkte Konfigurationsmöglichkeit ergibt sich hier, indem die IP-Adresse automatisch vergeben werden kann (DHCP [DHCP: Dynamic Host Configuration Protocol, definiert in RFC 2131] Dienst). Für nicht IP-fähige Geräte gibt es keine Rekonfigurationsmöglichkeit.

- In der physikalischen Schicht (inkl. Medium Access Control [auch Media Access Control], MAC, Sub-Schicht): Drahtlose Terminals können in heterogenen Umgebungen operieren, indem sie mehrere Funkmodems, z.B.

eines für GSM und eines für DECT, oder Multiband Modems aufweisen. Solche Geräte entsprechen nur den Anforderungen von Basisdiensten, z.B. Sprachübertragung. Im Rahmen der "Software Defined Radio", SDR, Initiative wird ein Modem mehrere Funktechnologien unterstützen.

(b) Programmierbare oder "Aktive Netzwerke" erlauben Änderungen der Funktionalität von Netzwerkknoten in lokalen Netzen (auch in Backbones), entweder durch Applikationen oder durch Benutzervorgaben. Einfache Beispiele, die von Applikationen gesteuert werden, sind Web- und Applikations-Level Proxies (Firewalls). In der , drahtlosen Welt' findet man Protocol Booster, Applikations-Proxies und sogenannte ,Loss Indication'-Mechanismen. Viele dieser Konzepte sind im Zugangsnetz (Access Network) realisierbar, daher können sie als Komponenten von Aktiven Netzwerkknoten betrachtet werden. Aktive Netzwerke werden das Rückgrat der Kommunikation der 4ten Generation bilden. Sie bieten das Potential, um Zeit und Kosten zur Einführung neuer Dienste und Protokolle drastisch zu reduzieren - man vergleiche mit dem mühsamen Upgrade der GSM Netze zu GPRS!

Alle aufgeführte Methoden haben jedoch negative Nebenwirkungen, wie z.B. die Unterbrechung der Dienstbereitstellung, den Verlust von Applikationsdaten, oder aber sie zwingen zur zeitlichen Unterbrechung der Verbindung mit anschliessendem Neuaufbau.

Die Rekonfiguration auf Applikationsebene erlaubt zwar die Anpassung der Arbeits- und

Ausführungsumgebung an die persönlichen Vorgaben der Endbenutzer, berücksichtigt aber keineswegs die Heterogenität der Netze oder der Ressourcen. Sowohl beim Übergang von einer Funkzelle in die nächste (horizontales Handover) als auch beim Übergang von einer Übertragungstechnolgie in eine andere (vertikales Handover) sind Dienst- und Applikationsunterbrechungen möglich. Zudem ist die Rekonfiguration auf physikalischer Ebene sehr ressourcenintesiv und bis heute sehr schlecht geeignet für kleine und kleinste mobile Geräte.

Moderne Kommunikation basiert jedoch auf Systemen die sich schnell an neue Aufgaben anpassen lassen und sowohl Benutzer- als auch Terminalmobilität unterstützen müssen. Drahtlose Geräte müssen in variablen Umgebungen funktionieren, in denen unterschiedliche Technologien und Netzbetreiber vorkommen. Dies umfaßt verschiedene drahtlose Technologien für Licht- (Laser, Infrarot), oder Funkübertragung, große Varianz von Bit-Fehlerraten, ein breites Spektrum von Übertragungsraten (von 9.6kbps in GSM bis 54Mbps in HIPERLAN/2), verschiedene Frequenzen und Modulationsverfahren und schliesslich eine große Anzahl von Protokollen. Diese Einsatzvariabilität schliesst unterschiedliche Mobilfunkbetreiber und Operatoren mit ein, welche proprietäre Abrechnungssysteme (Charging, Accounting und Billing Systeme) einsetzen. Dies zu gewährleisten, ist der vorstehend eräuterte Stand der Technik aus den geschilderten Gründen jedoch nur unzureichend in der Lage.

Zuammenfassend gesehen ist daher der bereits skizzierte relevante Stand der Technik vor dessen Hintergrund sich die Aufgabe der vorliegenden Erfindung stellt, durch folgende Dokumente gegeben:

- S. Balakrishnan, E. Amir Seshan, and R.H. Katz: "Improving TCP/IP performance over wireless networks", 1st Intl. Mobile Computing and Networking (MOBICOM'95), Berkeley, Nov. 1995.

- A.Bakre and B. Badrinath, "I-TCP: Indirect TCP for mobile hosts", Proc. 15th International Conf. on Distributed Computing Systems (ICDCS), May 1995.

- K.Brown and S. Singh, "M-TCP: TCP for mobile cellular networks", ACM Computer Communications Review, vol 27, no 5, 1997.

- A. Fox, S. Gribble, E. Brewer, E. Amir: Adapting to Network and Client Variability via On-Demand Dynamic Distillation. Proc. Seventh International Conference on Architectural Support for Programming Languages and Operating Systems (ASPLOS-VII), Oct. 1996, Cambridge, MA (Betrifft nur die übertragene Daten, die hier entweder nur teilweise geladen werden, damit der Benutzer entscheiden kann ob er die Daten doch braucht oder nicht, oder in Abhängigkeit des Datentyps (Video, Audio, reine Daten) entsprechende Kompressionsalgorithmen vor dem Daten-Downloaded zu benutzen. Die Autoren beschränken sich auf dem Applikationslevel).

- Tom Goff, James Moronski, Dhananjay S. Phatak, Vipul Gupta, "Freeze-TCP: A True End-to-End TCP Enhancement Mechanism for Mobile Environments", Proc of IEEE Infocom 2000.

- I.Hadzic, Applying Reconfigurable Computing to Reconfigurable Networks, PhD, Thesis, 1999.

- R. Ludwig, "Eliminating Inefficient Cross-Layer Interactions in Wireless Networking", Dissertation, Technische Hochschule Aachen, Deutschland, April 2000.

- W.S. Marcus, I. Hadzic, A.J. McAuley, J.M. Smith, Protocol Boosters: Applying Programmability to Network Infrastructures, IEEE Communications Magazine, vol. 36, no. 10, pp. 79-83, 2000.

- R.E.Schuh, C.Schuler, M.Mateescu, "An Architecture for Radio-Independent Wireless Access Networks", Proc. of the 49th IEEE Annual International Vehicular Techn. Conf. VTC'99, Vol 2, pp 1227 - 1231, May 1999, Houst, Texas, USA.

- G. Welling and B. R. Badrinath: A Framework for Environment Aware Applications: In Proceedings of the 17th ICDCS Conference, Baltimore, Maryland, May 1997.

- G.R.Wright, W.R.Stevens: TCP/IP-Illustrated, Vol. 1-3, Addison-Welsey, 1995.

- Software Radio, Special Issue of the IEEE Personal Communications Magazine, Vol. 6 No. 4, Aug. 1999.

Auch die nachfolgenden 3GPP Dokumente sind dabei als relevanter Stand der Technik zu berücksichtigen, welche derzeit unter http://www.3gpp.org gefunden werden können:

- 3G TS 22.057: "Mobile Station Application Execution Environment (MExE)"

- 3G TS 22.060: "General Packet Radio Service (GPRS); Service description; Stage 1".

- 3G TS 23.060: "General Packet Radio Service (GPRS); Service description; Stage 2".

- 3G TS 23.121: "Architectural Requirements for Release 1999".

- 3G TS 25.301: "Radio Interface Protocol Architecture".

- 3G TS 25.303: "Interlayer Procedures in Connected Mode".

- 3G TS 25.322: "RLC Protocol Specification".

- 3G TS 25.331: "RRC Protocol Specification".

- 3G TS 25.401: "UTRAN Overall Description".

- 3G TR 25.990: "Vocabulary for the UTRAN".

- 3G TS 27.060: "General Packet Radio Service (GPRS); Mobile Station (MS) supporting GPRS".

Ebenso sind auch die nachfolgenden RFC (Request für Comments) Dokumente dabei als relevanter Stand der Technik zu berücksichtigen, welche derzeit unter http://www.ietf.org gefunden werden können:

- IETF RFC 768 (1980): "User Datagram Protocol" (STD 6).

- IETF RFC 791 (1981): "Internet Protocol" (STD 5).

- IETF RFC 792 (1981): "Internet Control Message Protocol" (STD 5).

- IETF RFC 793 (1981): "Transmission Control Protocol" (STD 7).

- IETF RFC 1661 (1994): "The Point-to-Point Protocol (PPP)" (STD 51).

- IETF RFC 2002 (1996): "IPv4 Mobility Support".

- IETF RFC 2018 (1996): "TCP Selective Acknowledgement Options".

- IETF RFC 2131 (1997): "Dynamic Host Configuration Protocol".

- IETF RFC 2475 (1998): "An Architecture for Differnetiated Services".

- IETF RFC 2692 (1999): "SPKI Requirements".

- IETF RFC 2883 (2000): "An Extension to the Selective Acknowledgment (SACK) Option for TCP"

Angesichts der vorstehenden Ausführungen ist es vor dem Hintergrund dieses Standes der Technik Aufgabe der vorliegenden Erfindung Vorrichtungen anzugeben, die eine möglichst flexible Anbindung einer Mobilen Station an einen Internet-Protokoll Partner erlauben, dabei aber auch sowohl die schlechte Leistung insbesondere des TCP-Protokolls in drahtlosen Netzen als auch den hohen Ressourcenverbrauch bei zwingender Verwendung eines Internet-Protokollstapels in der Mobilen Station zu vermeiden hilft.

Diese Aufgabe wird sowohl durch

- eine Mobile Station **(MS)** zur Kommunikation mit einem Internet-Protokoll Partner, auch Correspondent Host **(CH)** genannt, die zur unmittelbaren Kommunikation über ein drahtloses Zugangsnetz mit einer Protokoll Relais Station **(MARC)** eingerichtet ist, über die sie die dann die mittelbare Kommunikation über ein Internet-Protokoll-Netz, vorzugsweise das öffentlich zugängliche Internet, mit dem Internet-Protokoll Partner (Correspondent Host, **CH**) führt

gelöst, die erfindungsgemäß dadurch gekennzeichnet ist,

daß die Mobile Station **(MS)** mit mindestens einem Protokollobjekt der Schichten 2 bis 4 (Fig. 1 und 2) während des Betriebes dynamisch geladen werden kann.

Vorzugsweise kann dabei die Mobile Station **(MS)** mit einem Zugangsnetzprotokollstapel als Protokollobjekt zur Abwicklung des Zugangsnetzprotokolls zur Kommunikation über das drahtlose Zugangsnetz während des Betriebes dynamisch geladen werden.

Die Erfindung wird jedoch auch durch das Gegenstück hierzu, nämlich durch

- eine Protokoll Relais Station, auch Mobile Access & Router Controller genannt **(MARC)** zur Kommunikation mit einer Mobilen Station **(MS)** über ein drahtloses Zugangsnetz einerseits und mit einem Internet-Protokoll Partner (Correspondent Host, **CH**) andererseits,

gelöst, welche erfindungsgemäß dadurch gekennzeichnet ist,

daß sie das Zugangsnetzprotokoll zur Kommunikation über das drahtlose Zugangsnetz in das Internet-Protokoll und umgekehrt das Internet-Protokoll in das Zugangsnetzprotokoll umsetzt und daß der MARC mit mindestens einem Protokollobjekt während des Betriebes geladen werden kann.

Durch beide vorstehenden Komponenten läßt sich ein Kommunikationssystem, SOCKLETS-System genannt bilden. Das SOCKLETS-System ermöglicht das Austauschen von Protokollobjekten, vorzugweise Protokollstapeln und ist applikationstransparent. Es ermöglicht so eine applikationstransparente Optimierung der drahtlosen Kommunikationsdienste. Das SOCKLETS System unterstützt dabei einerseits die dynamische Rekonfiguration der Endgeräte auf Netzwerkebene durch Code-Mobilität und andererseits auch die dynamische Optimierung der Zugangsnetze.

Mobile Stationen und Terminals waren bisher nur auf Applikationsebene bzw. auf physikalischer Ebene rekonfigurierbar. Es ist daher technisch vorteilhaft eine Rekonfigurationsmöglichkeit aller Protokollschichten wie nach der vorliegenden Erfindung hier vorzusehen. Während "Software Defined Radio" nach dem Stand der Tehnik die Adaptabilität hinsichtlich von Radiomodems gewährleistet, können austauschbare, spezialisierte und/oder "leichtgewichtige", optimierte DataLink-, Netzwerk- und/oder Transportprotokolle einerseits die Adaptabilität und damit Flexibilität zu a-priori unbekannten Zugängen sicherstellen und andererseits auch eine grössere, ressourcenschonende Variabilität in Qualitätssicherungsmechanismen (Quality of Service) ermöglichen, da sie als Zugangsprotokoll zum Zugangsnetz nicht des insbesondere für drahtlose oder asymmetrische Netze ungeeigneten Internet-Protokollstapels zwingend bedürfen. Vielmehr kann das Zugangsnetzprotokoll auf das Übertragungsmedium angepasst werden und die Umsetzung auf den Internet-Protokollstapel dem MARC überlassen bleiben.

Mit *Protokollobjekten* sind dabei hier sowohl allgemeine Kommunikations- und Protokollobjekte, vorzugsweise Protokollstapel, gemeint. Sie können Kommunikations-, Verwaltungs- und Berechnungsfunktionalitäten bereitstellen, wie auch gesamte Protokollschichten oder Protokollstapel. Die *Protokollobjekte* können in Hardware, Software oder in einer Kombination von Hard- und Software realisiert werden.

Der Protokollobjektaustausch ist für Applikationen völlig transparent und erfolgt per automatischem, halbautomatischem oder manuellem *"Einspielen"* von Protokollobjekten in das jeweilige Endgerät und/oder in die entsprechende Basisstation. Das *"Einspielen"* der Protokollobjekte kann sowohl über das Kommunikationsnetz (Download) als auch durch Laden seitens externer tragbarer/mobiler Speichermedien, wie z.B. SmartCards (Pre-paid Cards), PCMCIA oder PC Cards, SONY(geschützte Marke)-Sticks, Disketten, MiniDiscs, CompactDiscs, CompactFlash usw. erfolgen.

Das Initiieren des Einspielens und das Aktivieren der neuen Protokollobjekte kann manuell durch Schalterstellen, halbautomatisch oder automatisch erfolgen. Diese Objekte können sowohl Dienste-Erbringer als auch Dienste-Nehmer sein und kooperieren bei Bedarf miteinander. Nach der Injektion und Aktivierung des neuen Protokollobjekts findet ein "Protokoll-Handover" statt, indem der vertikale Datenfluss zwischen Applikationen und physikalischem Netz einen geänderten Pfad folgt. Eine Kontrollinstanz initiiert, aktiviert und überwacht sowohl das "Protokoll-Handover" als auch die entsprechenden Injektions- und

Austausch-Verfahren.

Die Möglichkeit eines Austauschs von Protokollobjekten bietet dabei folgende Vorteile:

1. Es besteht die Möglichkeit der Änderung der Qualitätsanforderung (Quality of Service-Anforderung), z.B. Echtzeitanforderungen für Sprache gegenüber Datenintegrität beim Download über Nacht eines Videos. Jeweils angepasste und ressourcenschonende Protokolle und Protokollobjekte können so ein optimales Leistungs-/Kostenverhältnis ermöglichen.

2. Änderung des Abrechnungsmodells. Dadurch können Dienste aufgewertet werden, indem sie "im Bundle" mit entsprechenden Protokollobjekten angeboten werden .

3. Änderung der operativen Umgebung, z.B. wechseln von einer öffentlichen (Strasse) in eine restriktiven (Krankenhaus) Umgebung. Obwohl GSM eine globale Abdeckung hat, ist seine Nutzung innerhalb eines Krankenhauses untersagt. Die Umgebung bestimmt in diesem Falle ob eine Technologie benutzt werden darf oder nicht.

Diese Flexibilität durch Adaptabilität wird durch die vorstehenden erfindungsgemäßen Vorrichtungen bzw. das hieraus gebildete erfindungsgemäße SOCKELTS-System erreicht.

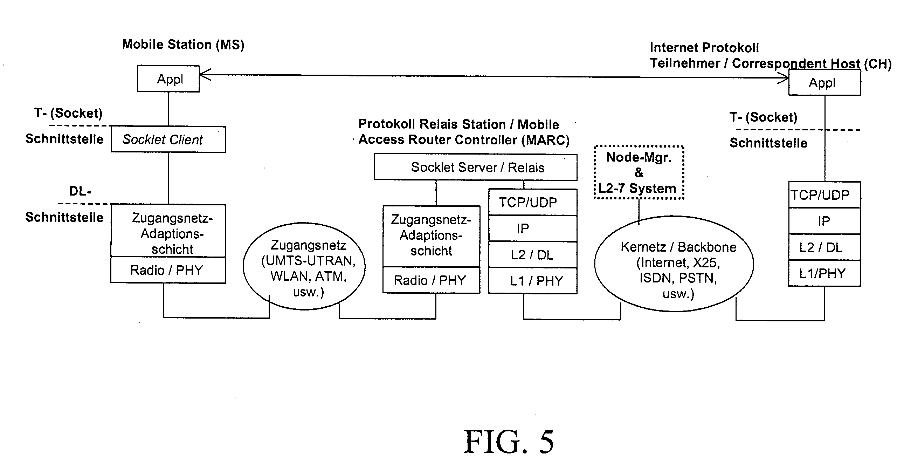

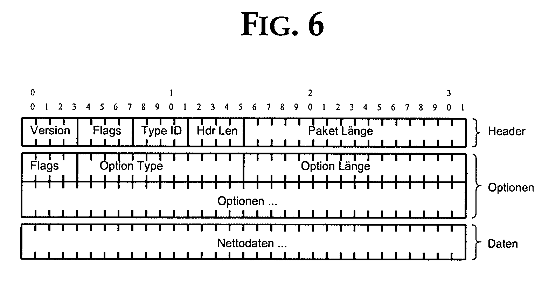

Hinsichtlich des Verständnisses von Details der vorstehenden Komponenten und ihrer Funktionsweise werden sei schon hier auf die Beschreibung im Detail anhand der Figuren und hier zunächst insbesondere auf die Beschreibung zu Fig. 5 und 6 verwiesen.

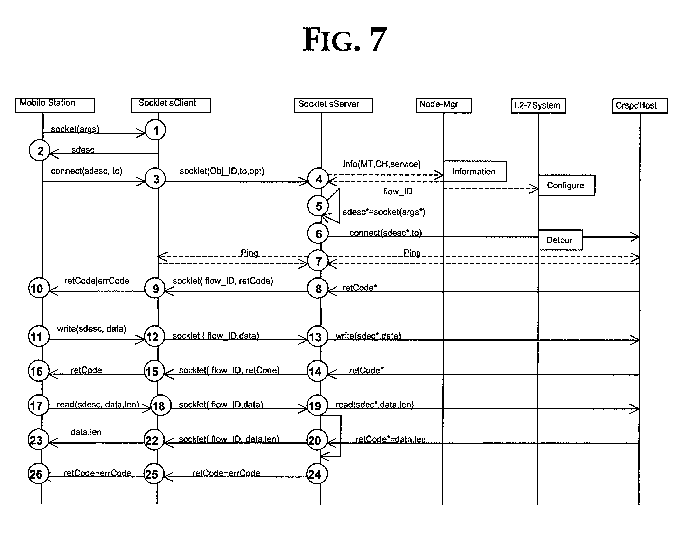

Vorzugsweise ist die Mobile Station **(MS)** nach der vorliegenden Erfindung so eingerichtet, daß sie während des Betriebes ohne Unterbrechung einer etwaigen Kommunikation mit dem Protokollobjekt, vorzugsweise Protokollstapel, geladen werden kann. Das Laden der Mobilen Station (MS) mit Protokollobjekten, vorzugsweise Zugangsnetzprotokollstapeln, erfolgt dabei besonders bevorzugterweise durch die Protokoll Relais Station **(MARC)** die hierfür in einer bevorzugten Ausführungsform nach der vorliegenden Erfindung besonders eingerichtet ist. Dies kann während des Betriebes der Mobilen Station **(MS)** ohne Unterbrechung einer etwaigen Kommunikation erfolgen. Die zugrundeliegende Technologie basiert auf dem "On-the-Fly" Einspielen und wird in der nachfolgenden Figurenbeschreibung im Detail erläutert, wobei hier insbesondere den Fig. 7, 8, 9, 10 und 12 die Aufmerksamkeit gelten sollte.

In einer Ausführungsform nach der vorliegenden Erfindung ist die Mobile Station **(MS)** zur Kommunikation mit einem Internet-Protokoll Partner **(CH)** dadurch gekennzeichnet, daß die sie so eingerichtet ist, daß sie mit mindestens zwei Protokollobjekten, vorzugsweise Zugangsnetzprotokollstapeln gleichzeitig geladen sein kann, wobei bevorzugterweise zwischen mehreren geladenen Protokollobjekten, vorzugsweise Zugangsnetzprotokollstapeln, umgeschaltet, besonders bevorzugterweise übertragungsunterbrechungsfrei umgeschaltet, werden kann. Dieser Umschaltvorgang wir dabei in einer weiteren bevorzugten Ausführungsform der Erfindung hier von der Protokoll Relais Station **(MARC)** vorgenommen, die dann sie so eingerichtet ist, daß sie die Mobile Station **(MS)** zur Umschaltung zwischen mehreren geladenen Protokollobjekten, vorzugsweise Zugangsnetzprotokollstapeln, veranlassen kann, wobei auch dies übertragungsunterbrechungsfrei geschenen kann. Die zugrundeliegende Technologie basiert auf dem "On-the-Fly" Aktivieren von Protokollobjekten innerhalb der mobilen Endgeräte und Zuganspunkte (Basisstationen, Access Points). Wegen der näheren Details sei hier insbesondere die Fig. 7, 8, 9, 10 und 12 und ihre jeweilige Bechreibung verwiesen.

In einer weiteren Ausführungsform ist die Mobile Station **(MS)** zur Kommunikation mit einem Internet-Protokoll Partner **(CH)** nach der vorliegenden Erfindung dadurch gekennzeichnet, daß sie so eingerichtet ist, daß unterschiedliche geladene Protokollobjekte, vorzugsweise Zugangsnetzprotokollstapel, von der Mobilen Station **(MS)** auch zur Kommunikation über unterschiedliche Zugangnetze verwendet werden. Auch kann die Protokoll Relais Station **(MARC)** nach der vorliegenden Erfindung so ausgestaltet sein, daß sie mehrere, vorzugsweise unterschiedliche, Zugangsnetzprotokolle zur Kommunikation über jeweilige drahtlose Zugangsnetze in das Internet-Protokoll und umgekehrt das Internet-Protokoll in das jeweilige Zugangsnetzprotokoll umsetzt. Hierdurch ermöglicht die vorliegende Erfindung eine dynamische Änderung der Transport- bzw. Kommunikationstechnologie, wie z.B. durch Übergang von einem öffentlichen Netz (GSM, GPRS) in ein privates bzw. lokale Netzs (drahtloses Netz, DECT).

Vorzugsweise weist sie auch eine Internet-Protokollstapel Schnittstelle **(T-Schnittstelle)** auf, auf die auf der Mobilen Station implementierte Applikationen zugreifen können. Im mobilen Endgerät wird durch Emulation der Socket Funktionalität ein Zugang zum Internet Protokollstapel (und somit zu allen weiteren Protokoll-Proxies, z.B. IPX) bereitgestellt. Das entsprechende API (API: Application Programming Interface) garantiert, daß alle Internet Applikationen, die die Socket Schnittstelle benutzen, ohne Modifikation funktionieren.

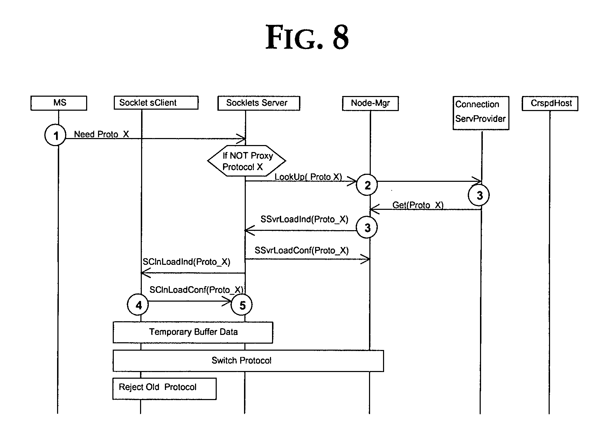

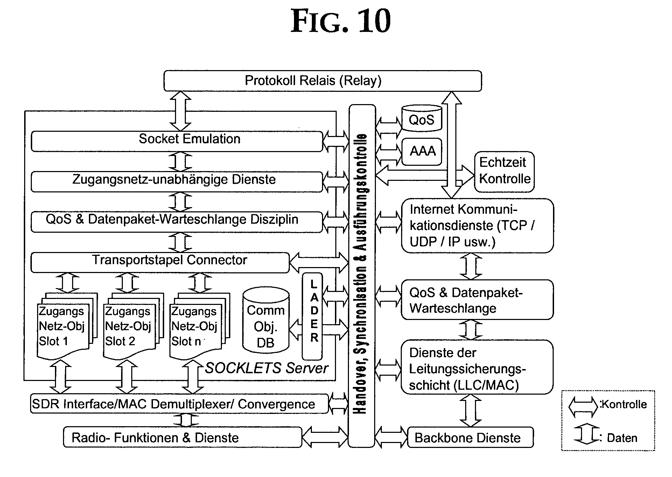

Die Protokoll Relais Station **(MARC)** nach der vorliegenden Erfindung kann so ausgestaltet sein, daß siedie jeweiligen Protokollobjekte, vorzugsweise Zugangsnetzprotokollstapel zur Kommunikation über das jeweilige drahtlose Zugangsnetz, von einem externen Server anfordert, wenn sie sie nicht selbst in ihrem Cache oder ihrer Datenbank vorrätig hat. Gleiches gilt wenn die Protokoll Relais Station **(MARC)** das jeweilige Protokollobjekt, vorzugsweise den jeweiligen Zugangsnetzprotokollstapel, zum Laden der jeweiligen Mobilen Station **(MS)** nicht in ihrem Cache oder ihrer Datenbank findet, auch dann kann sie es bevorzugterweise von einem externen Server anfordern. Wegen der näheren Details hierzu sei insbesondere auf die Fig. 8 und 10 und ihre Beschreibung verwiesen.

Zur Kommunikation mit dem jeweiligen Internet Protokoll-Partner **(CH)** kann die Protokoll Relais Station **(MARC)** sowohl das TCP-Protokoll, wie auch das UDP-Protokoll oder andere geeignete Protokolle verwenden.

Die vorliegende Erfindung ermöglicht somit das nahtlose, verlust- und betriebsunterbrechungsfreie Injizieren und Austauschen von Protokollobjekten, vorzugsweise Zugangsprotokollstapelobjekten oder Protokollstapeln in paket- und leitungsorientierten Kommunikationsvorrichtungen, so daß ein optimales Betriebs- und Energiekosten-Leistungsverhältnis zwischen Kommunikationsprotokollstapel und Übertragungs-Technologie bzw. Übertragungsmedium erzielt wird. Zusätzlich sind aufgrund der Verwendung der Internet-Protokoll Socket API (T-Schnittstelle) keine Änderungen an die Applikationen erforderlich.

Die vorliegende Erfindung weist eine Reihe technischer Vorteile auf. Im Einzelnen:

Dadurch, daß für die jeweils verwendete Übertragungstechnologie Protokolllobjekte (vorzugsweise Protokollstapel) dynamisch geladen werden können, wird ein Optimum beim Leistungs-Kosten Verhältnisses bzgl. der Nutzung der Ressourcen der Kommunukationsvorrichtung erzielt.

Die Erfindung erlaubt eine dynamische Rekonfiguration der Endgeräte auf Netzwerkebene, ebenso eine dynamische Optimierung der Zugangsnetze.

Es ist von Vorteil, Kommunikationsgeräte, ohne sie auszuschalten, mit Protokollobjekten vorzugsweise mit Protokollstapeln, die für unterschiedliche Übertragungstechnologien optimiert sind, auszustatten, so daß immer eine optimale Ausnutzung der Merkmale und Charakteristika des Übertragungsmediums erzielt werden kann.

Auch ist ein Abgleich der Kommunikationseigenschaften zwischen Endgerät und Zugansznetz möglich.

Mobile Endgeräte können bei verschiedenartigem Träger (Bearer), von z.B. ISDN, GSM, HIPERLAN/2, eine optimale Ressource-Ausnutzung erzielen, indem Netzwerk-, Transport- und Zugangsnetz-Protokolle in Abhängigkeit von den Trägereigenschaften (Frequenz, Modulation, MAC, usw.) gewählt werden. Zum Beispiel kann eine Internet-Applikation, die auf ein Personal Digital Assistant, PDA, über ein GSM Modem läuft, ohne vollständigen TCP/IP Protokollstapel mit dem Internet kommunizieren! Wird das PDA in seiner Dockingstation eingesteckt und wird eine Kommunikationsverbindung durch Kabel hergestellt, dann kann der vollständige TCP/IP Protokollstapel ins PDA geladen werden - ohne manuelle Umkonfiguration des Gerätes und ohne Unterbrechung der Applikation.

Mobile Endgeräte können ihren Energieverbrauch an die Applikationsanforderungen und die Einsatzgegebenheiten anpassen. So wird in obigem Beispiel der Energieverbrauch bei der GSM-Übertragung durch Vermeiden der Nutzung des vollständigen TCP/IP Protokollstapels drastisch reduziert.

Applikationen und Geräte können sich an a-priori "unbekannte" Anforderungen anpassen.

Applikationen und Geräte können sich an a-priori "unbekanntes" Netzwerkverhalten und Netzcharakteristika anpassen.

Nicht-Internet fähige Geräte und können mit Diensten des Internet-Protokoll Stapels erweitert werden.

Internet Applikationen können von verschiedenen Quality of Service Policies (und daraufbauenden Abbrechnungsmechanismen) profitieren und aufgewertet werden.

Es kann eine applikationstransparente Optimierung der drahtlosen oder drahtgebundenen Kommunikationsdienste erfolgen.

Die vorliegende Erfindung ermöglicht ein benutzerfreundliches und einfaches Upgrade der Kommunikationsendgeräte, und der Komponenten des Zugangsnetzes durch transparentes Laden und Aktuallisieren von ausführbarem Code.

Auch ermöglicht sie eine automatisierte und transparente Software-Fehlerbeseitung in den Kommunikationsgeräten, etwa das Einspielen von sogenannten Bug-Fixes.

Nur der Vollständiglkeit halber sei darauf hingewiesen, daß sich alle hier beschriebenen Verfahren und Funktionen zur Realisierung als Software, insbesondere mittels eines Computerprogramms eignen. Das jeweilige Computerprogramm eignet sich dabei insbesondere auch als Computerprogramm Produkt auf einem Datenträger gespeichert oder auch auf einem Trägersignal, etwa zum Down- oder auch Upload vorliegend.

Im Folgenden wird zum besseren Verständnis der Stand der Technik (Fig. 1 bis 4 und 14) und die vorliegende Erfindung mittels nicht einschränkend zu verstehender Ausführungsbeispiele (Fig. **5** bis **13** und **15**) anhand der Zeichnung besprochen. In dieser zeigen:

Fig. **1**   schematisch und sich selbst erläuternd die Funktionsweise Protokollstapel des Open Systems Interconnect Referenzmodells nach ISO 7498 nach dem Stand der Technik, wobei Pfeile Schnittstellen zwischen den Protokollschichten repräsentieren,

Fig. **2**   schematisch und sich selbst erläuternd einen Internet Protokollstapel nach dem Stand der Technik, wobei auch hier Pfeile Schnittstellen zwischen den Protokollschichten repräsentieren,

Fig. **2a**   eine schematische und sich selbst erläuternde Zuordnung der Schichten eines Protokollstapels nach Fig. 1 zu einem Internet Protokollstapel nach Fig. 2,

Fig. **3**   eine Dienst- und Technologiebezogene Unterteilung des Internet Protokollstapels,

Fig. **4**   eine Mobile Station mit vollständigem TCP/IP Protokollstapel nach dem Stand der technik,

Fig. **5**   die prinzipielle Architektur einer Ausführungsform des SOCKLETS-Systems nach der vorliegenden Erfindung,

Fig. **6**   ein SOCKLETS Encapsulation Protokoll PDU Format und Options Format nach der vorliegenden Erfindung,

Fig. **7**   ein sogenanntes Message Sequence Chart (MSC), welches zur Beschreibung von Prozessabläufen für eine von der mobilen Station initiierte Verbindung dient mit den hierin emulierten Aufrufen socket(), connect(), write() und read()nach der vorliegenden Erfindung,

Fig. **8**   ein sogenanntes Message Sequence Chart (MSC) für ein vom Mobile Terminal (MT) initiiertes Protokoll-Handover nach der vorliegenden Erfindung,

Fig. **9**   einen SOCKLETS Client mit den entsprechenden Modulen der Mobilen Station (MS) nach der vorliegenden Erfindung,

Fig.**10**   einen sogenannten Mobile Access & Routing Controller (MARC) und SOCKLETS Server nach der vorliegenden Erfindung,

Fig.**11**   eine Queue Disziplin nach der vorliegenden Erfindung,

Fig.**12**   eine Datenpufferungsdisziplin für gesicherte (reliable) Übertragung nach der vorliegenden Erfindung,

Fig.**13**   ein Convergence/Adaption & MAC Multiplexing nach der vorliegenden Erfindung,

Fig.**14**   eine Protokollbeendigung für einen ausgewählten Kanal (DCH) im UMTS-System in der Benutzerebene nach dem Stand der Technik nämlich der Quelle: 3G TS 25.301, Kap. 5.6.1, dort p. 30, Figure 13, und

Fig.**15**   eine Einbettung einer SOCKLETS Proxy Funktionalität in PDCP (UTRAN), UMTS Release '99 nach der vorliegenden Erfindung.

Fig. **1** zeigt schematisch und sich selbst erläuternd die Funktionsweise Protokollstapel des Open Systems Interconnect Referenzmodells nach ISO 7498 nach dem Stand der Technik, wobei Pfeile Schnittstellen zwischen den Protokollschichten repräsentieren.

Fig. **2** zeigt schematisch und sich selbst erläuternd einen Internet Protokollstapel nach dem Stand der technik, wobei auch hier Pfeile Schnittstellen zwischen den Protokollschichten repräsentieren.

Fig. **2a** zeigt eine schematische und sich selbst erläuternde Zuordnung der Schichten eines Protokollstapels nach Fig. 1 zu einem Internet Protokollstapel nach Fig. 2.

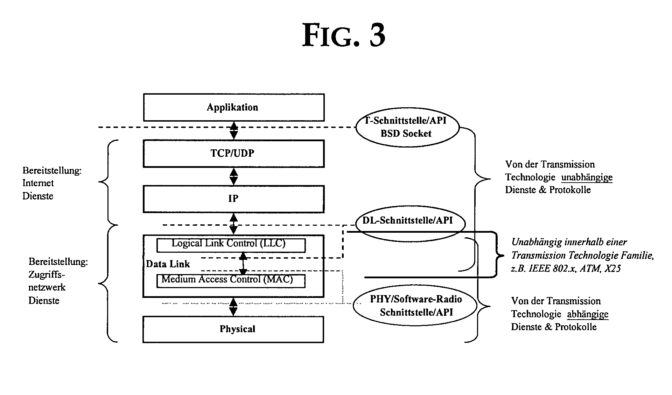

Fig. **3** zeigt eine Dienst- und Technologiebezogene Unterteilung des Internet Protokollstapels nach dem Stand der Technik.

Hier ist der Internet Protokollstapel in einer dienst- (links) und einer technologiebezogenen (rechts) Unterteilung dargestellt. In einem Internet-fähigen Gerät können wir anhand der Technologie- und der Dienstunterteilung zwei wichtige Schnittstellen identifizieren:

- Die Transport- bzw. Internet Service Schnittstelle (T-Schnittstelle). Sie entspricht vorzugsweise der wohlbekannten Unix-, BSD-Socket Schnittstelle (BSD-Socket API) (vgl. über Sockets: G.R.Wright, W.R.Stevens: TCP/IP-Illustrated, Vol. 1-3, Addison-Welsey, 1995).

- Die Leitungssicherungs-Schnittstelle (DL-Schnittstelle), die i.a. den Zugang von Internet Protokoll zum Zugangsnetz entspricht.

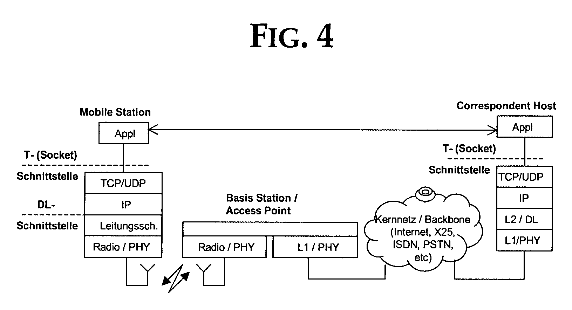

Fig. **4** zeigt eine Mobile Station mit vollständigem TCP/IP Protokollstapel nach dem Stand der Technik. Sie stellt die Architektur heutiger IP-basierter, drahtloser Netze dar. Sowohl in der Basisstationen als auch in den mobilen Endgeräten (Mobile Station) befindet sich ein vollständiger TCP/IP Protokollstack.

Die Basisstationen (auch Access Points genannt) sind bzgl. Rechenpower und Ressourcen sehr viel mächtiger als mobile Endgeräte und ihre Funktionalität kann leichter erweitert werden. Darüber hinaus skalieren Computing-Einheiten im Festnetz, wie z.B. Basisstationen, Router, Server, bzgl. Prozessorleistung und Speicherkapazität einfacher und leichter als die kleine mobile Geräte. Daher erscheint als logische Konsequenz, rechenintensive Operationen in das Festnetz auszulagern. Der TCP/IP Protokollstapel ist in seiner Abarbeitung sehr Ressourcen-intensiv und in seiner Realisierung sehr komplex. Kleine mobile Geräte werden aus vielen, meist technischen Gründen, nicht allzuviele parallele TCP Verbindungen mit dem Festnetz haben. Daher bringt ein vollständiger TCP/IP Protokollstapel im kleinen mobilen Endgerät nicht das erwünschte optimale Leistungs-Kostenverhältnis.

Fig. **5** zeigt die prinzipielle Architektur einer Ausführungsform des SOCKLETS-Systems nach der vorliegenden Erfindun. Die SOCKLETS-basierte Konnektivitätsarchitektur nutzt hier folgende Grundlagen:

1. Die TCP Zustandsmaschine kann von dem mobilen Endgerät in das Zugangsnetz ausgelagert werden.

2. Der Internet (TCP/IP) Protokollstapel (ein L2-7 System) kann durch eine "Zugangsnetz-Adaptionschicht" ersetzt werden, die an die jeweiligen Netzcharakteristika anpassbar ist.

3. Im mobilen Endgerät wird eine Emulation der Socket Funktionalität als Zugang zum Internet Protokollstapel und somit zu allen weiteren Protokoll-Stapeln, z.B. IPX) bereitgestellt. Das entsprechende API (API: Application Programming Interface) garantiert, daß alle Internet Applikationen, die die Socket Schnittstelle benutzen (das betrifft ca. 99,9% aller Internet Applikationen), ohne Modifikation laufen.

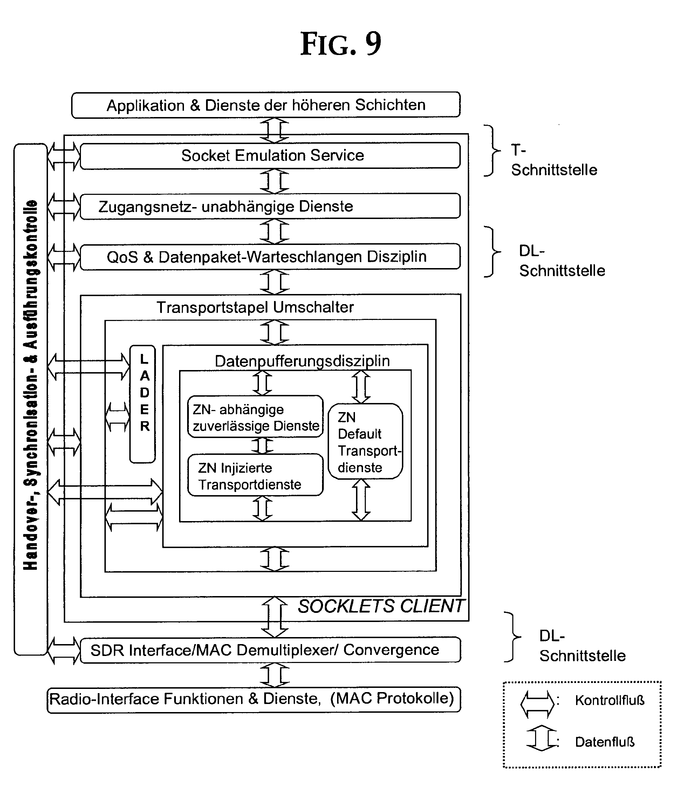

4. Im mobilen Endgerät wird eine generische Schnittstelle zur Leitungssicherungsschicht bzw. MAC (Medium Acess Control) bereitgestellt, s. Fig. 9. Diese erleichtert das Injizieren von Protokollobjekten.

5. In der Basisstation, oder in einer anderen Komponente des Zugangsnetzes, wird eine Relais- (Relay) Einheit eingeführt, die die Emulation der T-Schnittstelle unterstützt.

Im SOCKLETS-System wird eine TCP/IP-basierte Applikationsverbindung zwischen einer Mobilen Station (MS) und einem Rechner im Festnetz Correspondent Host (CH) folgendermassen aufgesplittet:

1. in eine für das drahtlose Netz optimierte Verbindung zwischen Mobilen Station und einen Mobile Acess & Router Controller (MARC) und

2. in eine TCP/IP Verbindung zwischen dem MARC und dem CH.

Eine Ende-zu-Ende TCP-Verbindung bzw. UDP-Übertragung, wie in der Figur hier zu sehen, zwischen einer *mobilen Station, MS,* und einem *Correspondent Host, CH,* wird durch den *Mobile Access & Router Controller, MARC,* gesplittet. Die Verbindung zwischen *MS* und *MARC* wird durch optimierte und austauschbare Kommunikationsobjekte hergestellt. Nach einer "Übersetzung" (Relay Funktionalität des SOCKLETS- Servers im MARC) wird über eine "normale" TCP-Verbindung bzw. UDP-Übertragung zwischen MARC und CH die Konnektivität MS <-> CH vervollständigt. Durch die Architektur des SOCKLETS- Systems können die Kommunikationsprotokolle an die Ansprüche und Möglichkeiten des jeweiligen Zugangsnetzes dynamisch angepasst und konfiguriert werden.

Ein Socket Emulation Service stellt die T-Schnittstelle bereit. In der mobilen Station wird die Schnittstelle zu den Applikationen durch den SOCKLETS-Client vorzugsweise als Emulation der BSD-Socket Methoden realisiert. Der SOCKLETS-Client stellt die entsprechenden Socket Methodenaufrufe bereit, übersetzt sie und bettet sie in Protocol Data Units (PDUs), s. Fig. 6, des Zugangsnetz-Adaption Protokolls (in Zugangsnetz-Adaptionschicht in der Fig. 5) ein.

Der SOCKLETS-Server des MARC extrahiert die eingebetteten Methoden, übersetzt diese in TCP/UDP Funktionsaufrufe, stellt (IP-) Adressierungs- und Routingmechanismen bereit und verwaltet die Transmission Control Blocks der entsprechenden TCP Verbindungen.

*Socket Emulationsdienst*

Die Mehrheit aller Internet - Applikationen bedient sich der Socket-Schnittstelle (Internet-Protokoll Schnittstelle, hier auch T-Schnittstelle genannt) um die Internet Kommunikationsdienste (TCP/UDP/IP) benutzen zu können. Der Socket Emulationdienst implementiert die - vorzugsweise alle - Socket Funktionsaufruf; dies besonders bevorzugterweise unter Berücksichtigung der Erweiterungen für proprietäre Betriebssysteme, z.B. Microsofts Window9x/NT/ 2000/XR/ME/CE/PC. Diese Funktionsaufrufe können darüber hinaus vorzugsweise intern mit Qualitätssicherungs- und Verwaltungsfunktionen erweitert sein.

Die Kommunikation zwischen dem SOCKLETS Client in der MS und dem SOCKLETS Server im MARC erfolgt über eine "Fluss-Identifikationsnummer" (Flow-ID), kurz FID. IP-Adressen und TCP bzw. UDP Service-Port Nummern werden auf FIDs abgebildet. Durch die FID werden Kommunikationsendpunkte bzw. Applikationen eindeutig identifiziert. Der Datenfluss innerhalb des SOCKLETS- Systems basiert auf diesen FIDs. Sie werden als

$$FID = H \ (MS\_IP, \ MS\_P, \ CH\_IP, \ CH\_P, \ Key)$$

erzeugt, wobei

- *MS_IP* bzw. *CH_IP* die IP-Adressen der MS bzw. des CH sind und

- *MS_P* bzw. *CH_P* die entsprechende TCP oder UDP Ports aus dem Socketfunktionsaufruf sind.

- *Key* ist ein eindeutiges Zertifikat wie z.B. der Geheimschlüssel der USIM oder SIM Karte der MS (etwa bei UMTS oder GSM Geräten) oder der private Schlüssel des Benutzers. Diesen Schlüssel kann der Benutzer selbst generieren oder durch eine Vertrauensinstanz (Trust Center) generieren lassen.

- *H(.)* ist eine Funktion, welche eindeutige Werte generieren kann, z.B. eine Hash-Funktion.

Mobile Stationen (MS), die von SOCKLETS kontrolliert werden, können vorzugsweise folgende Zuständen annehmen:

- IDLE. Der Zustand IDLE ist der Initialzustand. Vorzugsweise wird er immer dann eingenommen, wenn keine aktive Verbindung existiert.

- ACTIVE, wenn mindestens eine Verbindung zwischen MS und MARC bzw. einem CH existiert.

- TRANSIT, wenn eine Rekonfiguration des Endgerätes oder eine Adaption des Zugangsnetzes stattfindet.

*Zugangsnetz Protokoll (AN-Proto)*

Die Zugangsnetzschicht (Zugangsnetz-Adaptionschicht hier in Fig. 5) ist abhängig von der benutzten Übertragungstechnologie. Bietet eine Funktechnologie gesicherte Übertragung, dann wird ein ungesichertes, einfaches *Link Layer Control, LLC,* Protokoll eingesetzt. Anderenfalls wird ein gesichertes *Leitungssicherungs* Protokoll eingesetzt werden, mit Flusskontrolle über einem festem Übertragunsfenster (sliding window), Sequenznummern und mit positiver oder negativer Bestätigung (Ackowledgment) und entsprechenden Retransmissionsmechanismen.

Verschiedene Zugangsnetzprotokolle, oder Teile davon, können per Download z.B. von einem externen Mehrwertdienste-Anbieter geladen werden. Hierdurch kann auch das Laden eines vollständigen TCP/IP-Stapels oder anderer Protokollstapel, oder das Laden von Protokollobjekten für Software Defined Radios ermöglicht werden.

Ein "Default" Zugangsnetz-Protokollstapel, welcher für eine globale, drahtlose Transport-Technologie optimiert ist, ist vorzugsweise immer in "Bereitschaft". Während andere Protokollobjekte entfernt werden können, wird das "Default" Protokoll oder seine Teile vorzugsweise nicht entfernt, sondern - etwa bei Bedarf - nur temporär deaktiviert. Daher sollte der default Zugangsnetz-Protokollstapel möglichst ressourceschonend sein. Default Zugangsnetz-Protokolle können in einer Ausführungsform nach der vorliegenden Erfindung auch so realisiert sein, daß sie vom "Entfernen" nicht ausgeschlossen sind; dabei greifen vorzugsweise dann aber höhere Sicherheitsmaßnahmen. Der "Default" Protokollstapel kann so in aller regel als "Fall-Back" Technologie dienen, etwa wenn das Laden oder die Aktualisierung eines neuen Kommunikationsobjekts fehlschlägt.

Fig. **6** zeigt ein SOCKLETS Encapsulation Protokoll PDU Format und Options Format.

*SOCKLETS Encapsulation Mechanismus*

Applikationsdaten werden über die T-Schnittstelle an die entsprechende Socket Emulation übergeben. Die daraus entstandene *Protocol Data Units, PDUs*, werden anschliessend signiert und serialisiert *(marschalling)* und in sogennanten "SOCKLETS-PDUs" eingebettet. Die SOCKLETS-PDUs können unterschiedliche Formate haben. Ein Format der SOCKLETS-PDUs kann aus einem allgemeinen Header, gefolgt von mehreren terminalund aufgabenbezogenen Optionen, wie hier in der Fig. 6 zu sehen, bestehen. Optionsfelder können Status- und Steuerinformationen, z.B. den Status der Mobilen Station und der Applikation oder auch ausführbaren Code, tragen.
Im SOCKLETS Server werden die Optionen gefüllt oder abgearbeitet, die Daten serialisiert oder de-serialisiert, digitale Signaturen erzeugt oder überprüft und die wiedergewonnene PDU an den entsprechenden "Verbindungsslot" des Servers übergeben.
Daten aus dem CH werden im MARC vom Socket Emulation Service in SOCKLETS-PDUs eingebettet, serialisiert, signiert und an die MS über das drahtlose Netze geliefert. Der SOCKLETS-Client deserialisiert die Daten, überprüft die Signatur und liefert die Daten an die entsprechende Applikation.
Die Felder im Header der SOCKLETS-PDU haben folgende Bedeutung:

- Version. Gibt die Version des Protokolls wieder. Der Wert eins weist etwa auf ein Paketformat wie hier in der Figur hin. Der Wert zwei impliziert vorzugsweise ein Header Format bei dem die Felder die doppelte Bit-Länge haben. In Version zwei sind dann alle Felder länger: Version = 8bit, Flags=8bit, Type ID=16bit, Header Length = 16bit, Paket Länge = 16bit.

- Flags. Gibt Informationen für die Steuerung der Funktionalität der Socket Emulation.

- Type ID. Gibt den Typ des Pakets wieder. Es können Verwaltungs-, Kontroll-, Informations- und Datenpakete unterschieden werden.

- Hdr Len. Die Länge des Headers wird hier in ein Vielfaches von Oktetten oder von 16bit bzw. 32bit Werten gegeben.

- Paket Länge. Das ist die Länge des gesamten Pakets (Header+Daten).

Mehrere Optionen für die SOCKLETS Encapsulation in die SOCKLETS-PDUs können definiert werden. Einige Möglichkeiten werden in der nachfolgenden Tabelle dargestellt:

Tabelle 1:

| SOCKLETS PDU Optionen | |
|---|---|
| Optiontyp | Erläuterung |
| Quell-ID | IP-Adresse und Port Nummer des Senders |
| Ziel-ID | IP-Adresse und Port Nummer des Empfängers |
| Authentifikations-ID | Methode zur Authentifizierung, wie z.B. durch USIM, SIM, "Simple Public Key Infrastructure (vgl. Ellison, RFC 2692: "SPKI Requirements", Sept 1999)" (definiert in RFC 2692) |
| Flow-ID | Identifikation der Verbindung |
| Class Definition ID | Typ für ausführbaren Code |
| Object Definition ID | Identifikation des Objekts beim Handover |
| Signature ID | Digitale Signature oder Hash-wert des Pakets. |

Es müssen nicht alle Felder einer SOCKLETS-PDU ausgefüllt sein.
Fig. **7** zeigt ein sogenanntes Message Sequence Chart (MSC), welches zur Beschreibung von Prozessabläufen für eine von der mobilen Station initiierte Verbindung dient mit den hierin emulierten Aufrufen socket(), connect (), write() und read(), anhand dessen nun die weiteren Erläuterungen erfolgen.

*Beispiel eines Verbindungsaufbaus*

Instanzen, die an einem Verbindungsaufbau teilnehmen sind:

- Die Mobile Station (MS),

- der SOCKLETS-Client und der SOCKLETS-Server. Beide stellen die Socket-Emulation bereit.

- Ein Node Manager (in Fig. 7 hier als Node-Mgr bezeichnet). Der Node-Manager ist eine über alle Verbindungen buchführende Instanz und Kontrollinstanz. Er kann sowohl im MARC liegen, aber auch außerhalb, etwa in einer eigenen Systemeinheit implementiert sein.

- Ein L2-7 System (TCP/IP Zustandsmaschine oder auch TCP/IP-Stack bzw. TCP/IP-Protokollstapel genannt) welches die Schnittstelle zu dem Fixed-Netz darstellt. Es übernimmt Routing- und Überwachungsfunktionalitäten zwischen SOCKLETS-Server und entfernten Rechner (in Fig. 7 hier als CrspdHost bezeichnet).

Die Socket System Funktionsaufrufe werden in SOCKLETS-PDUs eingebettet und an MARC bzw. an die Basisstationen übertragen. Der SOCKLETS Server demultiplext die PDU und baut die Verbindung zum entfernten Host auf (Correspondent Host in Fig. 7 hier als CrspdHost bezeichnet).

Ein aktiver, vom mobilen Gerät initiierter Verbindungsaufbau sieht dabei unter Bezugnahme auf die Fig. 7 hier folgendermassen aus:

Schritt 1-2   Mit dem *socke()* Funktionsaufruf wird die Verbindungsintention normalerweise eingeleitet. Diese Aufruf ist von lokaler Bedeutung und stellt in der mobilen Station den Verbindungspunkt her. Die SOCKLETS Emulation liefert einen Socket-Descriptor zurück.

Schritt 3   Schritt 3: Die Applikation in der mobilen Station benutzt den *connect()* Funktionsaufruf um eine aktive Punkt-zu-Punkt Verbindung mit einem Gegenpart aufzubauen (CrspdHost). Wir nehmen an, daß die IP-Adresse und der Dienst-Port des Correspondent Hosts der Applikation zu diesem Zeitpunkt schon bekannt sind. Die Socket-Emulation in der Mobilen Station (SOCKLETS-Client in Fig. 7 hier) alloziert eine Daten-PDU mit der Option *Object Definition ID* und bettet den *connect()* Aufruf in das Optionspaket. Die Einbettung findet vorzugsweise nach de sogenannten C-Sprache Konvention statt. Diese gibt vor, wie Funktionsaufrufe und ihre Argumente auf den Stapel-Bereich (Stack) eines Prozessors abgelegt werden. Grund dafür ist, daß unter Unix-ähnlichen Systemen das Binden bzw. Laden von Bibliotheksobjekten sehr schnell erfolgen kann. Somit kann das Abarbeiten des Objektes um einiges schneller geschehen. Anschließend wird ein Hash-Wert über das gesamte Paket, unter Einbeziehung eines personalisierten Schlüssels des mobilen Gerätes (SIM, USIM oder anderes Zertifikat), berechnet.

Schritt 4   Wenn der SOCKLETS Server (SOCKLETS-Server in Fig. 7 hier) die Daten-PDU empfängt, extrahiert aus der Option das serialisierte Objekt und alloziert einen Transmission Control Block (s.dazu über Sokkets: G.R.Wright, W.R.Stevens: TCP/IP-Illustrated, Vol. 1-3, Addison-Welsey, 1995), TCB. TCBs beinhalten die TCP Zustandsmaschine und führen Buch über die Verbindungen für ihre gesamte Lebensdauer. Ein INFO Paket wird zu einem "Node Manager" (Node-Mgr in Fig. 7 hier) gesendet. In dem INFO-Paket sind Informationen über das Zugangsnetz (z.B. welche Technologie, Auslastung, usw.), über das mobile Gerät und über den Dienst enthalten. Normalerweise ist der erste Gesprächspartner ser MS der Node-Mgr, der die Vorarbeiten leistet um die MS über das L2-7System mit dem externen Diensteanbieter zu verbinden. Der Node-Mgr vergibt eine Flow_ID, die für die Verbindung der Applikation mit dem Correspondent Host innerhalb der Domäne, die vom Node-Mgr verwaltet wird, eindeutig ist.

Schritt 5   Der SOCKLETS-Server bereitet ein Socket mit dem Descriptor *sdesc\** für die Verbingung vor.

Schritt 6   Anschliessend wird die TCP Verbindung mit dem Correspondent Host aufgebaut.

Schritt 7   Der SOCKLETS-Server versucht, z.B. durch Ping (Ping ist ein IP-Mechanismus um die Existenz und Operabilität eines IP-Rechners festzustellen. Dabei wird auch die minimale, maximale und mittlere Datenumlaufzeit berechnet. Ping ist in RFC 792 definiert [siehe IETF RFC 792 (1981): "Internet Control Message Protocol" (STD 5)]), die "Umlaufzeit" (Round Trip Time) von der mobilen Station zum Correspondent Host zu erfahren. Oder fragt er beim Node-Manager (Node-Mgr in Fig. 7) nach.

Schritt 8 — Die Verbindung, die durch den Socket Descriptor *sdesc\** repräsentiert wird, wird auf ein Flow (Flow_ID in Schritt 4) abgebildet. Ab nun wird die Verbindung für diese Applikation zwischen SOCKLETS-Server und SOCKLETS-Client mit Hilfe dieses Flows identifiziert. Der Server bereitet eine Daten-PDU mit der Option *Flow ID* vor und sendet es zum mobilen Gerät. Ein Hash-Wert über das gesamte Paket, unter Einbeziehung eines personalisierten Zertifikates des Servers wird auch berechnet.

Schritt 9 — Der Client extrahiert die Flow_ID aus der Daten PDU und signalisiert der Applikation das Ergebnis. Dabei wird die Flow_ID auf den lokalen Socket Descriptor abgebildet.

Schritt 10 — Die Applikation erhält das Ergebnis aus ihrem *connect()* Aufruf - und kann nun Daten senden und empfangen.

Im Falle, daß es sich um eine UDP Übertragung handelt, wird entsprechend verfahren.

Die Architektur des SOCKLETS Systems erlaubt vorzugsweise keine blockierenden Systemaufrufe, um Ressourcen nicht unnötig lange an inaktive Prozessen zu binden. Alle blockierenden Aufrufe der Socket-Bibliothek werden mit Timeouts versehen und nach Zeitablauf mit einem Fehlerwert unterbrochen. So z.B. für den *read()* Aufruf (Schritt 17 hier in Fig. 7):

In Schritt 19 wird etwa ein Timer gestartet. Läuft dieser ab, bevor der zum Correspondent Host gerichteter *read()* Aufruf einen Wert zurückgeliefert hat, sendet Socket_Server zu der Applikation in der mobilen Station einen Fehler zurück. Timeout-Werte werden vorzugsweise von dem Node-Mgr berechnet, der die Auslastung des Zugangsnetzes und die von *L2-7 System* durchgeleiteten Verbindungen überwacht.

Fig. **8** zeigt ein sogenanntes Message Sequency Chart (MSC) für ein von der Mobilen Station (MS) initiiertes Protokoll-Handover wobei das MS-seitige Injizieren und Austauschen eines Protokollobjekts zu sehen.

*Rekonfiguration des Endgerätes/der mobilen Station*

Die dynamische Rekonfiguraion des Endgerätes, d.h. der Mobilen Station, MS, findet auf Netzwerkebene durch Protokoll-Handover statt. Währenddessen laufen bestehende Applikationen und Verbindungen unterbrechungs- und verlustfrei weiter. Die Aktivierung des neuen Protokollobjektes erfolgt durch den MARC bzw. die Node-Manager Instanz. Der Rekonfigurationsprozess lässt sich wie folgt beschreiben:

Schritt 1 — MARC fragt den Node-Manager, um zu erfahren, ob der Benutzer berechtigt ist, die entsprechende Terminalrekonfiguration durchzuführen und ob dieser Service abonniert ist. Bei negativer Antwort wird der Rekonfigurationsprozess abgebrochen.

Schritt 2 — Dann wird versucht aus dem lokalen Speicher (Cache) des SOCKLETS Servers im MARC das entsprechende Protokollobjekt in die MS zu laden. Wenn im SOCKLETS Server Cache keine Instanz des geforderten Protokollobjekts vorhanden ist, wird eine LookUp Anfrage an den Node-Manager gesendet.

Schritt 3 — Hat Node-Manager in seinem lokalen Speicher (permanenten oder flüchtigen) oder in einer ihm zugänglichen Datenbank das geforderte Objekt nicht, wird dies nach einer Lokalisierung des entsprechenden Anbieters vom diesem geladen.

Schritt 4 — Anschliessend wird das Objekt in den MARC geladen, der sofort das Laden des Objektes in die MS veranlassen kann.

Schritt 5 — Schliesslich findet eine Synchronisationsphase statt, indem u.a. die Daten von und zu der Applikation zwischengepuffert werden bevor das neue Protokollobjekt aktiviert wird. Erst wenn die Verbindung über das neue Objekt sich stabilisiert hat, wird das "alte" Objekt, sofern es nicht um ein "default" Objekt handelt, deaktiviert und vorzugsweise im Speicher entfernt.

Fig. **9** zeigt einen SOCKLETS Client mit den entsprechenden Modulen der Mobilen Station (MS).

*Endsystemvorrichtung und SOCKLETS Client*

Der SOCKLETS-Client residiert in dem mobilen Endsystem (einer Mobeilen Station [MS]) und ist das Verbingungsglied zwischen Applikationen und Medium Access Controller (MAC) der jeweiligen drahtlosen Transport-Technologie (etwa Funk, Draht oder Licht). Die funktionale Elemente, Module und Dienste, des SOCKLETS-Client sind hier in Fig. 9 dargestellt.

Die Dienste der Ausführungsumgebung des Endsystems werden von folgenden Modulen bereitgestellt:

- Handover-, Synchronisation- & Ausführungskontrolle: Zentraler Prozess zu Überwachung, Koordination und Verwaltung der gesamten Ausführungsumgebung. Die Synchronisation aller Prozesse und die Überwachung des Handovers und der Datenkonsistenz finden hier statt.

- Socket Emulation: Schnittstelle zwischen Applikation und SOCKLETS-Client. Umsetzen der Socket-Funktionsaufrufe in interne Systemfunktionen und Einbettung der Applikationsdaten in SOCKLETS-PDUs. Extrahieren der Applikationsdaten aus SOCKLETS-PDUs und Lieferung an die Applikationen. Dies ist beschrieben unter Überschriften *Socket Emulationsdienst* in der Besprechung zu Fig. 5 bzw. *SOCKLETS Encapsulation Mechanismus* in der Besprechung zu Fig. 6.

- Zugangsnetz-unabhängige Dienste: Hier werden alle Funktionalitäten bereitgestellt, die von der Übetragungstechnologien unabhängig sind und für alle Leitungssicherungsprotokolle Gültigkeit haben, z.B. Abbildung von Hardware-Adressen in IP-Adressen (Address Resolution Protocol, ARP, und Reverse ARP), Daten-Framing, usw.

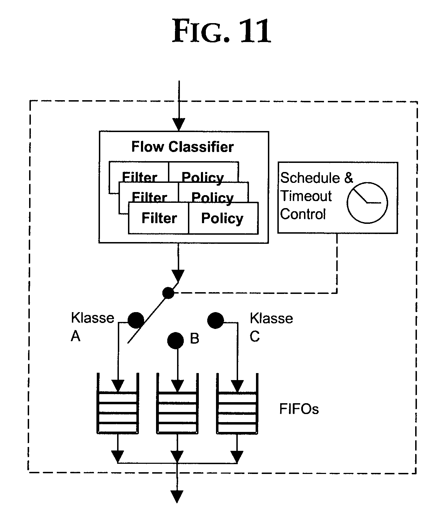

- QoS & Datenpaket-Wartschlangen Disziplin: Qualitätssicherungsmodule für Bandbreite, Jitter, Verzögerung (Delay) und Priorisierung der Daten. Dies ist beschrieben unter der Überschrift *QoS & Datenpaket-Wartschlangen Disziplin* in der Besprechung zu Fig. 11.

- Transportstapel Umschalter: In diesem Modul wird entschieden über welchen Protokollstapel für das Zugangsnetz die Daten übetragen werden. Der jeweilige Status (IDLE, ACTIVE, TRANSIT) der mobilen Station wird festgelegt. Ein Lader für Protokollobjekte realisiert das Laden und Aktualisieren neuer Protokollobjekte bzw. das Deaktivieren nicht mehr benötigter Protokollobjekte. Eine umfassende, generalisierte Schnittstelle erlaubt das Anbinden unterschiedlicher, existierender und zukünftiger Zugansnetzprotokolle.

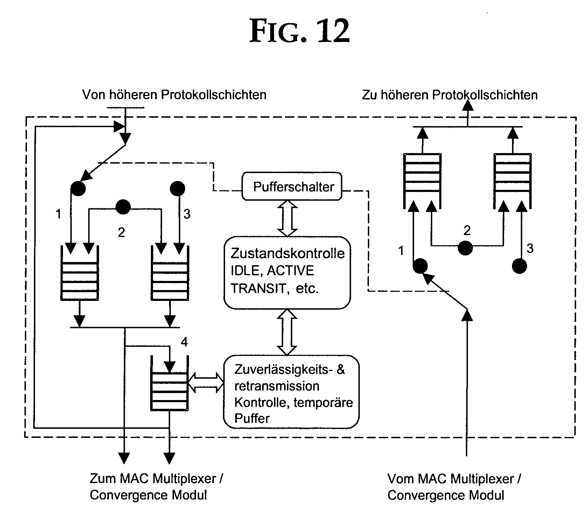

- Datenpufferungsdisziplin: Während der TRANSIT Phase werden Daten und der
  Code für die ausführbare Objekte temporär gespeichert. Nach der Aktivierung der geladenen Protokollobjekte wird die Konsistenz der Nutzdaten überprüft und entsprechend reagiert. Der ausführbare Code wird hier, bevor er in das Betriebssystem eingebunden wird, untersucht. Die gesicherte Datenübertragung im TRANSIT Zustand ist unter der Überschrift *Datenpufferungsdisziplin* zu Fig. 12 beschrieben

- Zugangsnetz Transportdienste: Diese Module / Objekte, die in dem Transportstapel Umschalter Modul eingeschlossen werden, realisieren die Transport-, Netzwerkund Leitungssicherungsfunktionalität der jeweiligen Übetragungstechnologien. Sie stellen spezialisierte Dienste der Leitungssicherungsschicht bereit, wie z.B. Retransmissions- und Datensicherungsmechanismen, oder Paketfragmentierung. Hier residieren ladbare und austauschbare Objekte für die dynamische Rekonfiguration der mobilen Station. Link-Layer Protokolle für verschiedene Medium Access Controller (MAC) werden hier gehalten. Ein Sub-Modul liefert die Funktionalitäten des "Default" Protokolls (ZN Default Transportdienste hier in Fig. 9).

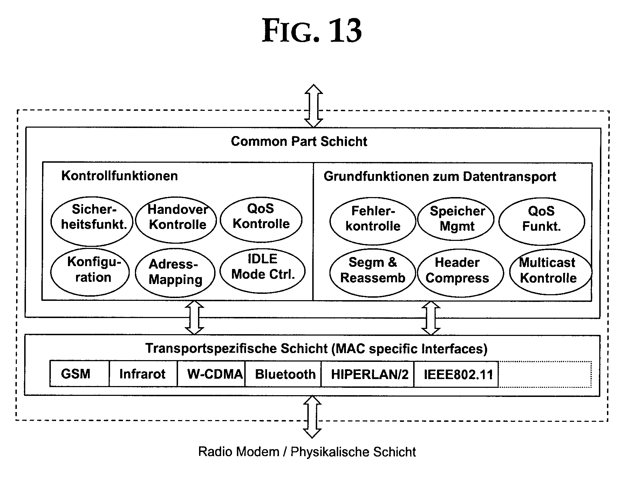

- SDR Interface / MAC Multiplexer / Convergence: Abstraktionsmodul für die Radio-Hardware. Dies ist bechrieben unter der *Überschrift MAC Multiplexer & Convergence Interface* zu Fig. 13.

Fig. **10** zeigt einen sogenannten Mobile Access & Routing Controller (MARC) und
SOCKLETS Server.

*Rekonfiguration des Zugangsnetzes*

Die Rekonfiguration des Zugangsnetzes erfolgt hauptsächlich im MARC und im wesentlichen parallel und ähnlich wie die Rekonfiguration der mobilen Endgeräte (Mobile Stationen, MS). Im MARC sind für jede unterstützte Übetragungstechnolgie entsprechende Protokollstapel vorgesehen. Diese können dabei zwar installiert, nicht jedoch aktiviert sein. Die Aktivierung hängt davon ab, ob es eine Benutzungsanfrage gibt (vom MS oder Node-Mgr bzw. CH). Jede MS bekommt nach der Aktivierung des entsprechenden Objektes einen "Verbindungsslot" zugewiesen, über den alle Kommunikation stattfindet, die dieses Objekt nutz. Nicht installierte Kommunikationsobjekte werden entweder vom Node-Manager oder vom externen Anbietern geladen und dann aktiviert. Der Prozess der Konfiguration des Zugangsnetzes, der andere vorhandene Verbindungen nicht unterbricht oder stört, läßt sich durch folgende Schritten beschreiben:

Schritt 1  Wenn eine Anfrage zur Aktivierung eines Protokollobjekts kommt, wird als erstes untersucht ob dieses Objekt in MARCs permanentem oder flüchtigem Speicher (SOCKLETS Server Cache oder Datenbank) vorhanden ist.

Schritt 2  Falls das Objekt vorhanden ist, wird untersucht, ob dieses Objekt in der MS schon vorhanden ist. Im negativen Fall wird das Objekt in die MS geladen.

Schritt 3  Falls das Objekt in dem SOCKLETS Server Cache nicht vorhanden ist, wird es von einem externen Anbieter (nach einer positiven Lokalisierungsanfrage) in das Cache und anschliessend in die MS geladen.

Schritt 4  Die MS bekommt einen neuen Verbindungsslot (ZugangsNetz ObjSlot hier in Fig. 10) zugewiesen, um das geladene Objekt benutzen zu können.

Schritt 5  Das geladene Objekt wird sowohl in MARC als auch in MS aktiviert und ggf. "alte" Objekte werden deaktiviert bzw. aus dem Speicher entfernt.

*MARC Module und SOCKLETS Server*

Der *Mobile Access & Routing Controller, MARC* ist vorzugsweise in der Lage Verbindungen von mehreren mobilen Stationen und Applikationen zu verwalten und zu kontrollieren, er initiiert und überwacht das Austauschen und Herunterladen (den Download) von Protokollobjekten in Mobile Stationen (MS) und zu sich selbst und schliesslich dient er auch als Protokoll-Relais (Relay) zum Internet.
Die Dienste der SOCKLETS Servers werden von folgenden Modulen bereitgestellt werden:

Handover, Synchronisation & Ausführungskontrolle: Zentraler Prozess zu Überwachung, Koordination und Verwaltung der gesamten Ausführungsumgebung. Die Synchronisation aller Prozesse und die Überwachung der Datenkonsistenz finden hier statt.

Quality of Service, QoS: Datenbank (Repository) mit den geltenden Abmachungen/Policies (Regeln) bzgl. Dienstqualität, die von den jeweiligen Netztechnologien, Benutzer- und Geräteprofile festgelegt werden.

AAA: Rundimentäre Sicherheits- und Buchführungsdienste für alle Verbindungen.

Protokoll - Relais (Relay): Umsetzung der proprietären, internen SOCKLETS Verbindungen zwischen MS und MARC in entsprechende Internet Verbindungen zwischen MARC und Correspondent Host (CH). Dies geschieht völlig transparent zu den Applikationen, d.h. die Applikation in der Mobilen Station, MS, und ihr Gegenpart in dem Correspondent Host, CH, sehen nur eine Ende-zu-Ende Verbindung und kommen mit der Aufsplittung/Wiederzusammensetzung der Verbindung, die im MARC stattfindet, nicht in Berührung.

Socket Emulation: Umsetzen der Socket-Funktionsaufrufe in interne Systemfunktionen und Einbettung der IP-Daten in SOCKLETS-PDUs. Extrahieren der Daten aus SOCKLETS-PDUs und Einbettung in Pakete des Internet-Protokollstapels. Dies ist beschrieben unter Überschriften *Socket Emulationsdienst* in der Besprechung zu Fig. 5 bzw. *SOCKLETS Encapsulation Mechanismus* in der Besprechung zu Fig. 6.

Zugangsnetz- unabhängige Dienste: Hier werden alle Funktionalitäten bereitgestellt, die von der Übetragungstechnologie unabhängig sind und für alle Leitungssicherungsprotokolle Gültigkeit haben, z.B. Adressabbildungen von Hardware-Adressen der mobilen Stationen in IP-Adressen (Address Resolution Protocol, ARP, und Reverse ARP), Framing, usw. Verwaltung von Pagingfunktionen und von lokalen Multicast-Gruppen.

QoS & Datenpaket-Wartschlangen Disziplin: Qualitätssicherungsmodule für Bandbreite und Delay. Priorisierung der Datenströme (Flows). Ausgleichs- (Load - Balancing) Mechanismen zur gezielten Steuerung der Bandbreitenbenutzung und Datenverzögerung. Umsetzung der Quality of Service Policies, die als QoS Datenbestand hier in der Fig. 10 dargestellt sind. Es werden zwei Instanzen dieses Moduls benötigt: eine um die Übetragung von / zum Zugangsnetz und eine für die Übetragung von/zum Backbone Dies ist beschrieben unter der Überschrift *QoS & Datenpaket-Wartschlangen Disziplin* in der Besprechung zu Fig. 11.

Dienste und Stapel für Zugangsnetze (als Zugangsnetz Objekte hier in Fig. 10): Diese Module / Objekte realisieren die Funktionalität der jeweiligen Übertragungstechnologien. Sie stellen spezialisierte Dienste der Leitungssicherungsschicht bereit, wie z.B. Retransmissionsund Datensicherungsmechanismen, oder Paketfragmentierung. Link-Layer Protokolle für verschiedene Medium Access Controller (MAC) werden hier gehalten. Jeder Stapel kann eine maximale Anzahl von Slots verwalten. In einem Slot kann eine mobile Station "andocken" um die Dienste des entsprechenden Protokolls zu benutzen. Alle relevante Zustandsdaten der Verbindungen einer mobilen Station, die einen bestimmten Protokollstapel benutzen, werden in diesem "Verbindungsslot" gehalten und von diesem kontrolliert. Stapel und Slots können genau wie eine Mobile Station drei Wirkzustände annehmen: IDLE, ACTIVE, TRANSIT. IDLE bedeutet daß der Stapel schon geladen aber nicht aktiviert ist. ACTIVE weist auf einen aktiven Stapel, der keinen, einen oder mehrere aktive Slots haben kann. In TRANSIT befinder sich ein Stapel während Zusatzobjekte geladen / aktiviert / deaktiviert werden. Während der TRANSIT Phase werden Daten und der Code für die ausführbare Objekte temporär gespeichert. Nach der Aktivierung der geladenen Kommunikationsobjekte wird die Konsistenz der Nutzdaten überprüft und entsprechend reagiert. Die gesicherte Datenübertragung im TRANSIT Zustand ist unter der Überschrift *Datenpufferungsdisziplin* zu Fig. 12 beschrieben.

Transportstapel Connector: In diesem Modul wird für jede zu benutzende Funkübetragungs-Technologie ein Zugangsnetzprotokollstapel mit mehreren Slots (Access Net Slots) bereitgestellt. Eine umfassende, generalisierte Schnittstelle erlaubt das Anbinden unterschiedlicher, existierender und zukünftiger Zugansnetzprotokolle. Das Laden und Aktivieren eines neuen Protokollobjektes- bzw. -stapels führt zum Iniitieren und Aktivieren eines neuen Slots. Mehrere Slots aus unterschiedlichen Stapeln können einer Mobilen Station zugewiesen werden. Die Zugangsnetzstapel können dynamisch geladen, aktiviert bzw. gelöscht werden. Durch hierarchisches Anordnen der Kommunikationsobjekte kann eine abgestimmte Partitionierung (fine granular partitioning) der Ressourcen im MARC erfolgen und somit eine bessere Performance erzielt werden.

CommObj. DB: Eine lokale Kopie (SOCKLETS Server Cache als CommObj. DB hier in Fig. 10) mit Instanzen der meistbenutzten Kommunikationsobjekte. Jeder aktivierte Stapel bzw. jedes Kommunikationsobjekt legt eine eigene Kopie in diesen Cache. Deaktivierte Objekte werden vorzugsweise nicht sofort aus dem System entfernt, sondern im Cache für eine Zeit gehalten. Dies hilft häufiges Nachladen von externen Anbietern zu vermeiden.

Lader: Realisiert das Laden, Aktualisieren und Deaktivieren von Kommunikationsobjekten bzw. Protokollen.

MAC Multiplexer / Convergence: Abstraktionsmodul für die Radio-Hardware. Dies ist beschrieben unter der Überschrift *MAC Multiplexer & Convergence Interface* in der Beschreibung zu Fig. 13.

Internet Kommunikationsdienste: Dieses Modul stellt Standarddienste und erweiterte Dienste eines Internet Protokollstapels bereit, wie z.B. Differential Services (IETF RFC 2475 (1998): "An Architecture for Differentiated Services"), Transportprotokolle TCP/UDP, RTP, das IP (Internet Protocol).

Radio- Funktionen & Dienste (Dienste der Leitungssicherungsschicht): In diesem Modul werden in Abhängigkeit von der Backbone - Übetragungstechnologie, wie z.B. ATM, die entsprechende standardisierten Dienste der Datenübetragungsschicht (DataLink, Logical Link Control, Medium Access Aontrol (MAC) usw.) bereitgestellt.

Backbone Dienste: Das Modul stellt die Konnektivitätsfunktionalität für die Anbindung des MARCs an den Backbone zur Verfügung. Die Verbindung kann sowohl drahtgebunden als auch drahtlos, als Wähl- oder Festverbindung erfolgen. Dies Module stellt die Schnittstelle zu allen Backbone-Protokollen, wie z.B. ATM, ISDN, Ethernet, SONET dar.

Fig. 11 zeigt eine Warteschlangen (Queue) Disziplin nach der vorliegenden Erfindung.

*QoS & Datenpaket-Wartschlangen Disziplin*

In diesem Modul werden die Qualitätssicherungsmassnahmen für die Datenübetragung realisiert. Jedem Datenpaket wird einer Priorität zugewiesen (Filter). Die Prioritäten werden durch Policies (Regeln) festgelegt. Die Policies werden in Abhängigkeit vom mehreren Faktoren, wie z.B. Kostenmodell, Endgerätefähigkeiten, Netzwerkauslastung, Mehrwertdienst, bestimmt. Dabei werden die Qualitätsvorgaben für die die gesamte Verbindungsstrecke (Mobile Station <-> MARC <-> Correspondent Host) berücksichtigt.

Die priorisierten Pakete werden in entsprechende Daten-Warteschlangen (FIFOs) geleitet. Jedes FIFO wird getrennt getaktet / geleert gemäss seiner Klassen-Policies. Als Parameter für die Festlegung der Policies und somit der Filter werden Bandbreite-, Jitter- und die Übertragungsverzögerungswerte benutzt. Diese Parameter sind von den Charakteristik des Zugangsnetzes abhängig. Damit können z.B. folgende Qualitätsklassen realsiert werden:

- <u>Klasse A</u> für konstante Übertragungsverzögerung (Delay). Diese Klasse ist für Applikationen mit Echtzeitanforderungen nötig, z.B. Sprache. Jedes Datenpaket dieser Klasse wird von einem Timer-Prozess gesteuert.

- <u>Klasse B</u> für garantierte Minimum Bandbreite, für z.B. Streaming Applikationen (Video). Ein Scheduler (Bandbreiten-Broker) ist für die Einteilung der Bandbreite zwischen den Verbindungen verantwortlich. Hauptfaktoren hier sind die Charakterisitka des Zugangsnetzes.

- <u>Klasse C</u> als "Hintergrundübertragung" (Best Effort), für Datenübertragung (Web, FTP, eMail) die keine garantierte Bandbreite oder zeitlichen Restriktionen oder Garantien benötigen.

Fig. **12** zeigt eine Datenpufferungsdisziplin für gesicherte (reliable) Übertragung nach der vorliegenden Erfindung.

*Datenpufferungsdisziplin*

Die "Datenpufferungsdisziplin" dient der gesicherten Datenübertragung im TRANSIT Zustand. Mit Hilfe eines Zustandskontrollers (Zusandkontrolle) wird der Datenfluss gelenkt.

Im ACTIVE Zustand findet keine Pufferung statt. Im TRANSIT Zustand wird der Datenfluss in Abhängigkeit der installierten und funktionsfähigen Protokolle gleichzeitig durch mehrere Protokollstapel durchgeführt. Dabei wird die Zuverlässigkeit durch eine zusätzliche Zwischenspeicherung der ausgehenden Daten erhöht. Dieser temporärer Puffer wird nach dem Synchronisationsprozess (siehe auch MSC Diagramm nach Fig. 8) bzw. nach Ablauf einer bestimmten Zeit freigegeben.

Hier in Fig. 12 ist zu sehen, daß ein Pufferschalter den Pfad regelt, den die Datenpakete zu den Speicherelementen (FIFOs) nehmen müssen. Bei Verbindungen im ACTIVE-Zustand leitet der Pufferschalter die Daten in den Pufferspeicher **1.** Geht die Verbindung in den TRANSIT Zustand über, dann werden die Pakete parallel über zwei Wege (Schalterposition **2**) geleitet, z.B. einen für das vorhandene Protokollschema und einen für das "Default" Protokoll. Nach Installieren und Aktivieren der neuen Objekte, leitet der Schalter die Pakete über z.B. den Weg **3**. Während des TRANSIT-Zustands können Pakete dupliziert werden und in einem temporären Speicher **4** abgelegt werden. Der temporäre Speicher wird von einem Zeitgeber überwacht. Vorzugseise können die Pufferelemente, wenn erforderlich, dynamisch erzeugt und wieder freigegebenwerden.

Die geladenen Daten werden mit Hilfe des AAA Moduls im MARC und mit Hilfe des Laders (MARC und MS) untersucht, es wird z.B. ihre digitale Signatur oder ihr Hashwert überprüft und es wird ihre Schnittstelle zur Ausführungsumgebung geprüft. Die digitale Signatur oder der Hashwertz soll garantieren daß der ausführbare Code von einem vertrauenswürdigen Anbieter stammt. Die Überprüfung der Schnittstelle soll Abstürze der Mobilen Station oder Beeinträchtigungen der MARC-Funktionalität verhindern oder zumindest doch erschweren.

Fig. **13** zeigt ein Convergence/Adaption & MAC Multiplexing nach der vorliegenden Erfindung.

*MAC Multiplexer & Convergence Interface*

Eine Konvergenzschicht erlaubt hier die transparente Anbindung sowohl bereits existierender MAC Protokolle als auch zukunftiger "Software Defined Radio" Schnittstellen.

Die Konvergenzschicht wird in eine allgemeine (Common Part) und eine transportspezifische Schicht unterteilt.

Die <u>Common Part</u> Schicht, unterteilt in einem Kontroll- und einen Datenpfad, stellt die funktionalen Schnittstellen zur den gemeinsamen Medium-Access Diensten dar: Sicherheits- und Fehlerkontrolle, Kompressionsverfahren, Schnittstelle zu Handover-Mechanismen, Konfigurationsdienste für die Funkmodems, Speichermanagement für die Pakete, Segmentation und Wiederzusammenfügen von Daten, Multicast, Adressierungsfunktionen und Paging (IDLE Mode Control).

Innerhalb der transportspezifischen Schicht werden Schnittstellen für mehrere Funktechnologien, wie z.B. GSM, W-CDMA, HIPERLAN/2, IEEE802.11, Infrarot, Bluetooth bereitgestellt. Zudem beinhaltet diese Schicht vorzugsweise eine "Software Defined Radio" Schnittstelle (SDR-Interface).

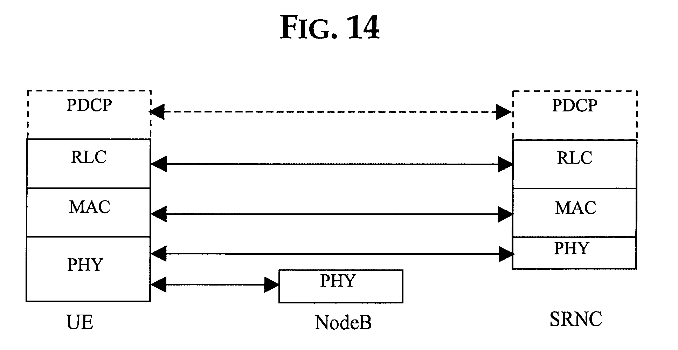

Fig. **14** zeigt eine Protokollbeendigung für einen ausgewählten Kanal (DCH) im UMTS-System in der Benutzerebene nach dem Stand der Technik nämlich der Quelle: 3G TS 25.301, Kap. 5.6.1, dort Seite 30, Figure 13. Hierin bezeichnen *UE:* User Equipment, *MAC:*Medium Access Control, *RLC:* Radio Link Control, *PDCP:* Packet Data Convergence Protocol, *NodeB*=Basisstation, *SRNC:* Serving Radio Network Control als feststehende Begriffe i.S. der 3G TS 25.301 (vgl. dort Kap. 3, 7ff.).

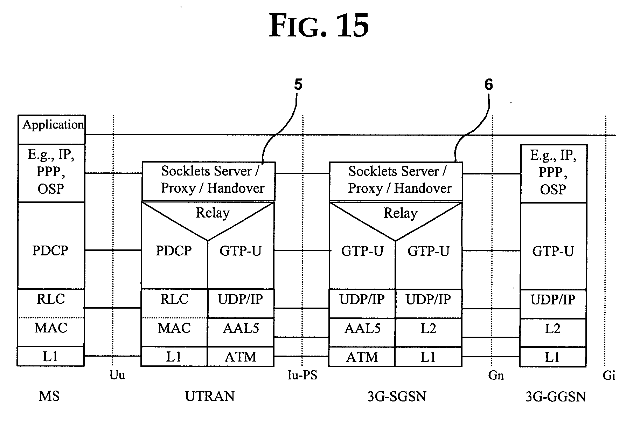

Fig. **15** zeigt eine Einbettung einer SOCKLETS Proxy Funktionalität in PDCP (UTRAN), UMTS Release '99 nach der vorliegenden Erfindung.

Anhand dieser Fig. **14** und **15** wird nun im folgenden eine Ausführungsform der vorliegenden Erfindung am Beispiel einer SOCKLETS-Einbettung in UMTS besprochen.

SOCKLETS passen sehr gut im UMTS - Rahmen und lassen sich nahtlos in UMTS einbinden. Die Einbettung der SOCKLETS-Funktionalität in UMTS kann an zwei Stellen erfolgen:

1. innerhalb des UTRAN (UTRAN:UMTS Terrestrial Radio Access Network. Beschrieben in 3G TS 25.401: "UTRAN Overall Description") mit Zugang zur Uu Schnittstelle (s. Fig. 15), oder

2. als eigenständiger IP Netzwerk-Node, in *Iu-PS* oder in *Gn* Schnittstellen (s. Fig. 15)

<u>Fall 1</u> **5**:Hier befindet sich der SOCKLETS Server bzw. der MARC innerhalb des UTRAN, Fig. 5, und hat Zugang zum Uu-Interface.

Wenn die SOCKLETS direkten Zugriff auf die *Uu-* Schnittstelle des UMTS - Systems haben können, so können die Protokollobjekte und somit Teile der Funktionalität des Protokoll-Handovers in UTRAN über PDCP (PDCP: Packet Data Convergence Protocol) erfolgen, da die PDCP Netzwerkschicht alle Applikationen transparent weiterreicht, wobei aus der Sicht von PDCP SOCKLETS natürlich nichts anderes als Applikationen sind, (dazu 3GPP TS 25.323). PDCP terminiert in SRNC (SRNC: Serving RNC. RNC: Radio Network Control), so daß bei einem Handover (Relocation in UMTS Nomenklatur) der SOCKLETS-Status weitergereicht werden kann.

Sind die benötigten Kommunikationsobjekte (Protokoll-Proxies) noch nicht im Cache des neuen SRNC und ggf. des MARC, dann müssen die entsprechende Protokollobjekte geladen werden. Erst nach Installation und Aktualisierung der entsprechenden Objekte im Ziel MARC / SRNC kann die Mobile Station weiter über diese Protokollobjekte kommunizieren. Ist es dagegen nicht möglich, ein Protokollobjekt in das Ziel-SRNC, bzw. MARC zu laden, dann initiiert MARC ein "Fall-Back" der Mobilen Station in das "Default" Protokoll (s. auch die Ausführungen unter der Überschrift *SOCKLETS Encapsulation Mechanismus* in der beschreibung zu Fig. 6 über das Access Network-Protokoll). Für Punkt-zu-Punkt Kommunikation sind zwei unterschiedliche Protocol-Data-Unit Formate für PDCP definiert. SOCKLETS benutzen PDCP-Data PDUs. Nach 3GPP TS 25.323, Table 5, hat die PDCP-Data-PDU folgendes Format:

Tabelle 2:

| PDCP PDU Format (Quelle: 3GPP TS 25.323, Table 5) | |
|---|---|
| *PDU Typ* | *PID* |
| Daten | |

Im *PDU Typ* Feld wird der Typ der PDCP-Daten-PDU nach folgender Tabelle definiert.

Tabelle 3:

| PDCP-Data-PDU Type Field. | |
|---|---|
| *Bit* | *PDU Type* |
| *000* | Das PDU-ID Feld wird zur Information über die Header-Kompression benutzt. |
| *001-111* | Reserviert |

Das *PID* Feld gibt dem PDCP-Data-PDU type wieder.

| *Bit* | *Beschreibung* |
|---|---|
| *00000* | Keine Header-Kompression |
| *00001-11111* | Dynamisch ausgehandelte Kompression |

Es wird keine Vorgabe gemacht über die Relation zwischen PID-Wert und benutzen Algorithmus oder Paketdatentyp. PID Werte werden dynamisch bei der Aushandlung von PDCP Parametern ausgehandlet. Damit ist es möglich neue Protokolle über PDCP zu laden.

<u>Fall 2</u> **6**( SOCKLETS Server / MARC im Core-Netzwerk, Fig. 5, *Iu-PS-, oder Gn-Interface*):

Die Iu-PS und Gn- Schnittstellen verbinden IP-basierte Komponenten, die über das *GPRS Tunnelling Protocol, GTP* (Das GTP-U ist in 3G TS 29.060 und 3G TS 23.060 definiert.), kommunizieren. Der SOCKLETS Status kann in diesem Fall in GTP Pakete eingebettet werden und von MARC zu MARC geroutet werden.

*UMTS Handover (Relocation) und SOCKLETS*

Wenn die SOCKLETS Kommunikationsvorrichtung in UTRAN eingesetzt wird, dann ist es sehr wichtig, daß bei einem Handover (In UMTS Nomenkaltur mit Serving RNC Relocation bzw. Routing Area oder Location Area Update benannt [3G TS 25.301, 3G TS 23.060]) zu einer neuen Zelle der SOCKLETS Status mitübertragen wird. Der UMTS-Handover Mechanismus ist zwar sehr komplex, für die SOCKLETS Architektur ist aber nur ein Punkt wichtig.

Der SOCKLETS Status kann, nachdem die "Relocation Vorbereitungsprozedur" erfolgreich abgeschlossen wird, in der "Relocation Commit" Nachricht eingebettet werden, die der Quell-SRNC zum Ziel-SRNC sendet. Dabei werden die SRNC Kontexte zum Ziel-RNC übermittelt. Für das 'Forwarden' (weiterreichen) des SOCKLETS-Status ist notwendig, daß bei der Serving RNC Relocation Prozedur (3G TS 23.060 Kap. 6.9.2.2) dem Ziel-RNC der SOCKLETS-Status mittels RNC RAB (RAB: Radio Access Bearer ) Kontext mitgeteilt wird (3G TS 23.060 Kap. 13.7, Table 11). Dafür wird ein neuer Kontext, der die SOCKLETS Stati berücksichtigt, definiert.

Der Relocation Prozess lässt sich nun folgendermassen zusammenfassen:

1. SRNC triggert die Ausführung der Relocation.

2. SRNC erfragt den SOCKLETS-Status (SOCKLETS spezifisch).

3. SRNC sendet eine "Relocation Commit" Nachricht zum Ziel-RNC, mit der erweiterten RAB, die den SOCKLETS-Status enthält. (SOCKLETS spezifisch).

4. Ziel SRNC empfängt die "Relocation Commit" Nachricht.

5. Ziel SRNC setzt den SOCKLETS-Status. (SOCKLETS spezifisch).

## Patentansprüche

**1.** Mobile Station **(MS)** zur Kommunikation mit einem Internet-Protokoll Partner (CH), die zur unmittelbaren Kommunikation über ein drahtloses Zugangsnetz mit einer Protokoll Relais Station **(MARC)** eingerichtet ist, über die sie die dann die mittelbare Kommunikation über ein Internet-Protokoll-Netz, vorzugsweise das öffentlich zugängliche Internet, mit dem Internet-Protokoll Partner **(CH)** führt, **dadurch gekennzeichnet, daß** die Mobile Station **(MS)** mit mindestens einem Protokollobjekt während des Betriebes dynamisch geladen werden kann.

**2.** Mobile Station **(MS)** zur Kommunikation mit einem Internet-Protokoll Partner **(CH)** nach Anspruch 1, **dadurch gekennzeichnet, daß** die Mobile Station **(MS)** mit einem Zugangsnetzprotokollstapel als Protokollobjekt zur Abwicklung des Zugangsnetzprotokolls zur Kommunikation über das drahtlose Zugangsnetz während des Betriebes dynamisch geladen werden kann.

**3.** Mobile Station **(MS)** zur Kommunikation mit einem Internet-Protokoll Partner **(CH)** nach Anspruch 1 oder 2, **dadurch gekennzeichnet, daß** die Mobile Station **(MS)** so eingerichtet ist, daß sie während des Betriebes ohne Unterbrechung einer etwaigen Kommunikation mit dem Protokollobjekt, vorzugsweise Protokollstapel, geladen werden kann.

**4.** Mobile Station **(MS)** zur Kommunikation mit einem Internet-Protokoll Partner **(CH)** nach Anspruch 1, 2 oder 3, **dadurch gekennzeichnet, daß** die Mobile Station **(MS)** so eingerichtet ist, daß sie mit mindestens zwei Protokollobjekten, vorzugsweise Zugangsnetzprotokollstapeln gleichzeitig geladen sein kann.

**5.** Mobile Station **(MS)** zur Kommunikation mit einem Internet-Protokoll Partner **(CH)** nach Anspruch 4, **dadurch gekennzeichnet, daß** die Mobile Station **(MS)** so eingerichtet ist, daß sie zwischen mehreren geladenen Protokollobjekten, vorzugsweise Zugangsnetzprotokollstapeln, umschalten kann.

**6.** Mobile Station **(MS)** zur Kommunikation mit einem Internet-Protokoll Partner **(CH)** nach Anspruch 5, **dadurch gekennzeichnet, daß** die Mobile Station **(MS)** so eingerichtet ist, daß sie von einem geladenen gerade aktiven Protokollobjekt, vorzugsweise Zugangsnetzprotokollstapel, während der Kommunikation auf einen anderes geladenes Protokollobjekt, vorzugsweise einen Zugangsnetzprotokollstapel, übertragungsunterbrechungsfrei umschalten kann.

7. Mobile Station **(MS)** zur Kommunikation mit einem Internet-Protokoll Partner **(CH)** nach einem der Ansprüche 3 bis 6, **dadurch gekennzeichnet, daß** die Mobile Station **(MS)** so eingerichtet ist, daß unterschiedliche geladene Protokollobjekte, vorzugsweise Zugangsnetzprotokollstapel, von der Mobilen Station **(MS)** auch zur Kommunikation über unterschiedliche Zugangnetze verwendet werden.

8. Mobile Station **(MS)** zur Kommunikation mit einem Internet-Protokoll Partner **(CH)** nach einem der Ansprüche 1 bis 7, **dadurch gekennzeichnet, daß** die Mobile Station **(MS)** so eingerichtet ist, daß sie eine Internet-Protokoll Schnittstelle **(T-Schnittstelle)** aufweist, auf die auf der Mobilen Station implementierte Applikationen zugreifen können.

9. Protokoll Relais Station **(MARC)** zur Kommunikation mit einer Mobilen Station **(MS)** über ein drahtloses Zugangsnetz einerseits und mit einem Internet-Protokoll Partner **(CH)** andererseits, **dadurch gekennzeichnet, daß** sie das Zugangsnetzprotokoll zur Kommunikation über das drahtlose Zugangsnetz in das Internet-Protokoll und umgekehrt das Internet-Protokoll in das Zugangsnetzprotokoll umsetzt.

10. Protokoll Relais Station **(MARC)** nach Anspruch 9, **dadurch gekennzeichnet, daß** sie mehrere, vorzugsweise unterschiedliche, Zugangsnetzprotokolle zur Kommunikation über jeweilige drahtlose Zugangsnetze in das Internet-Protokoll und umgekehrt das Internet-Protokoll in das jeweilige Zugangsnetzprotokoll umsetzt.

11. Protokoll Relais Station **(MARC)** nach Anspruch 10, **dadurch gekennzeichnet, daß** sie so eingerichtet ist, daß unterschiedliche Protokollobjekte, vorzugsweise Zugangsnetzprotokollstapel, von ihr auch zur Kommuikation über unterschiedliche Zugangnetze verwendet werden.

12. Protokoll Relais Station **(MARC)** nach Anspruch 10 oder 11, **dadurch gekennzeichnet, daß** sie jeweilige Protokollobjekte, vorzugsweise Zugangsnetzprotokollstapel zur Kommunikation über das jeweilige drahtlose Zugangsnetz, von einem externen Server anfordert.

13. Protokoll Relais Station **(MARC)** nach einem der Ansprüche 9 bis 12, **dadurch gekennzeichnet, daß** sie bei der Umsetzung des Zugangsnetzprotokolls in das Internet-Protokoll und umgekehrt des Internet-Protokolls in das Zugangsnetzprotokoll als Protokoll der Transportschicht zur Kommunikation über das Internet-Protokoll Netz mit dem jeweiligen Internet Protokoll-Partner **(CH)** ein TCP-Protokoll verwendet.

14. Protokoll Relais Station **(MARC)** nach einem der Ansprüche 9 bis 12, **dadurch gekennzeichnet, daß** sie bei der Umsetzung des Zugangsnetzprotokolls in das Internet-Protokoll und umgekehrt des Internet-Protokolls in das Zugangsnetzprotokoll als Protokoll der Transportschicht zur Kommunikation über das Internet-Protokoll Netz mit dem jeweiligen Internet Protokoll-Partner (**CH**) ein UDP-Protokoll verwendet.

15. Protokoll Relais Station (**MARC**) nach einem der Ansprüche 9 bis 14, **dadurch gekennzeichnet, daß** sie so eingerichtet ist, daß sie die jeweilige Mobile Station **(MS)** mit einem Protokollobjekt, vorzugsweise einem Zugangsnetzprotokollstapel zur Abwicklung des Zugangsnetzprotokolls zur Kommunikation über das drahtlose Zugangsnetz, während des Betriebes der Mobilen Station **(MS)** laden kann.

16. Protokoll Relais Station **(MARC)** nach Anspruch 15, **dadurch gekennzeichnet, daß** sie so eingerichtet ist, daß sie die jeweilige Mobile Station **(MS)** mit dem Protokollobjekt, vorzugsweise Zugangsnetzprotokollstapel, während des Betriebes der Mobilen Station **(MS)** ohne Unterbrechung einer etwaigen Kommunikation laden kann.

17. Protokoll Relais Station **(MARC)** nach Anspruch 15 oder 16, **dadurch gekennzeichnet, daß** sie das jeweilige Protokollobjekt, vorzugsweise den jeweiligen Zugangsnetzprotokollstapel, zum Laden der jeweiligen Mobilen Station **(MS)** von einem externen Server anfordert.

18. Protokoll Relais Station **(MARC)** nach einem der Ansprüche 9 bis 17, **dadurch gekennzeichnet, daß** sie so eingerichtet ist, daß sie die Mobile Station **(MS)** zur Umschaltung zwischen mehreren geladenen Protokollobjekten, vorzugsweise Zugangsnetzprotokollstapeln, veranlassen kann.

19. Protokoll Relais Station **(MARC)** nach Anspruch 18, **dadurch gekennzeichnet, daß** sie so eingerichtet ist, daß sie die Mobile Station **(MS)** zur Umschaltung von einem geladenen gerade aktiven Protokollobjekt, vorzugsweise Zugangsnetzprotokollstapel, während der Kommunikation auf einen anderes geladenes Protokollobjekt, vorzugsweise einen Zugangsnetzprotokollstapel, übertragungsunterbrechungsfrei veranlassen kann.

**20.** Kommunikationssystem **(SOCKLETS-System)** zur Anbindung von Mobilen Stationen **(MS)** an Internet-Protokoll Partner **(CH)**, welches zumindest eine Mobile Station **(MS)** nach einem der Ansprüche 1 bis 8 und zumindest eine Protokoll Relais Station **(MARC)** nach einem der Ansprüche 9 bis 19 aufweist.

# FIG. 1

Open Systems Interconnect, OSI,
Referenzmodell (ISO 7498)

| | |
|---|---|
| Applikation | Schicht 7 |
| ⇕ | |
| Präsentation | Schicht 6 |
| ⇕ | |
| Session | Schicht 5 |
| ⇕ | |
| Transport | Schicht 4 |
| ⇕ | |
| Netzwerk | Schicht 3 |
| ⇕ | |
| Leitungssicherung (Data Link) | Schicht 2 |
| ⇕ | |
| Physikalische | Schicht 1 |

# FIG. 2

Internet Protokoll
Suite

| Applikation | Schicht 5-7 |
| TCP / UDP | Schicht 4 |
| IP | Schicht 3 |
| Leitungssicherung (Data Link) | Schicht 2 |
| Physikalische | Schicht 1 |

# FIG. 2A

Open Systems Interconnect, OSI,
Referenzmodell (ISO 7498)

| | | |
|---|---|---|
| | Applikation | Schicht 7 |
| | ⇕ | |
| Internet Protokoll Suite | Präsentation | Schicht 6 |
| | ⇕ | |
| Applikation | Session | Schicht 5 |
| Schicht 5-7 | | |

| Applikation | Schicht 5-7 | Session | Schicht 5 |
|---|---|---|---|
| ⇕ | | ⇕ | |
| TCP / UDP | Schicht 4 | Transport | Schicht 4 |
| ⇕ | | ⇕ | |
| IP | Schicht 3 | Netzwerk | Schicht 3 |
| ⇕ | | ⇕ | |
| Leitungssicherung (Data Link) | Schicht 2 | Leitungssicherung (Data Link) | Schicht 2 |
| ⇕ | | ⇕ | |
| Physikalische | Schicht 1 | Physikalische | Schicht 1 |

# FIG. 3

```
                    ┌─────────────────────────┐
                    │      Applikation         │
                    └─────────────────────────┘           ╭────────────────────╮
                                 ↕                         │ T-Schnittstelle/API │
                    ┌─────────────────────────┐            │    BSD Socket       │
Bereitstellung:     │       TCP/UDP           │            ╰────────────────────╯
Internet            └─────────────────────────┘                        Von der Transmission
Dienste                          ↕                                     Technologie unabhängige
                    ┌─────────────────────────┐                        Dienste & Protokolle
                    │          IP             │
                    └─────────────────────────┘           ╭────────────────────╮
                                                          │ DL-Schnittstelle/API│
                    ┌─────────────────────────┐            ╰────────────────────╯
                    │ ┌─────────────────────┐ │                   Unabhängig innerhalb einer
                    │ │Logical Link Control  │ │                   Transmission Technologie Familie,
Bereitstellung:     │ │      (LLC)           │ │                   z.B. IEEE 802.x, ATM, X25
Zugriffs-           │Data Link               │
netzwerk            │ ┌─────────────────────┐ │           ╭────────────────────╮
Dienste             │ │Medium Access Control │ │           │ PHY/Software-Radio   │
                    │ │      (MAC)           │ │           │  Schnittstelle/API   │
                    │ └─────────────────────┘ │           ╰────────────────────╯
                    └─────────────────────────┘                       Von der Transmission
                                 ↕                                     Technologie abhängige
                    ┌─────────────────────────┐                       Dienste & Protokolle
                    │       Physical          │
                    └─────────────────────────┘
```

## FIG. 4

**Mobile Station**

**Correspondent Host**

| Appl |
| Appl |

T- (Socket)
Schnittstelle

TCP/UDP

DL-
Schnittstelle

IP

Leitungssch.

Radio / PHY

**Basis Station /
Access Point**

Radio / PHY

L1 / PHY

Kernnetz / Backbone
(Internet, X25,
ISDN, PSTN,
etc)

T- (Socket)
Schnittstelle

TCP/UDP

IP

L2 / DL

L1/PHY

Mobile Station (MS)

Internet Protokoll
Teilnehmer / Correspondent Host (CH)

| Appl |

| Appl |

**T- (Socket)**

**T- (Socket)**

**Schnittstelle**  | Socklet Client |

**Protokoll Relais Station / Mobile
Access Router Controller (MARC)**

**Schnittstelle**

| Socklet Server / Relais |

Node-Mgr.
&
L2-7 System

**DL-**

| TCP/UDP |

| TCP/UDP |

**Schnittstelle** | Zugangsnetz-
Adaptionsschicht |

| Zugangsnetz-
Adaptionsschicht |

| IP |

Zugangsnetz
(UMTS-UTRAN,
WLAN, ATM,
usw.)

| IP |

| L2 / DL |

Kernetz / Backbone
(Internet, X25,
ISDN, PSTN,
usw.)

| L2 / DL |

| Radio / PHY |

| Radio / PHY |

| L1 / PHY |

| L1/PHY |

## FIG. 5

EP 1 322 089 A2

FIG. 6

| Version | Flags | Type ID | Hdr Len | Paket Länge | Header |
| Flags | Option Type | | Option Länge | | Optionen |
| Optionen ... | | | | | |
| Nettodaten ... | | | | | Daten |

## FIG. 7

# FIG. 8

# FIG. 9

Applikation & Dienste der höheren Schichten

Socket Emulation Service — T-Schnittstelle

Zugangsnetz- unabhängige Dienste

QoS & Datenpaket-Warteschlangen Disziplin — DL-Schnittstelle

Transportstapel Umschalter

LADER

Datenpufferungsdisziplin

ZN- abhängige zuverlässige Dienste

ZN Default Transport-dienste

ZN Injizierte Transportdienste

SOCKLETS CLIENT

Handover-, Synchronisation- & Ausführungskontrolle

SDR Interface/MAC Demultiplexer/ Convergence — DL-Schnittstelle

Radio-Interface Funktionen & Dienste, (MAC Protokolle)

⟷ : Kontrollfluß

⇕ : Datenfluß

# FIG. 10

## FIG. 11

FIG. 12

Von höheren Protokollschichten

Zu höheren Protokollschichten

Pufferschalter

1

2

3

Zustandskontrolle
IDLE, ACTIVE
TRANSIT, etc.

4

2

1

3

Zuverlässigkeits- &
retransmission
Kontrolle, temporäre
Puffer

Zum MAC Multiplexer /
Convergence Modul

Vom MAC Multiplexer /
Convergence Modul

# FIG. 13

| Common Part Schicht | | | | | |
|---|---|---|---|---|---|
| **Kontrollfunktionen** | | | **Grundfunktionen zum Datentransport** | | |
| Sicher-heitsfunkt. | Handover Kontrolle | QoS Kontrolle | Fehler-kontrolle | Speicher Mgmt | QoS Funkt. |
| Konfigu-ration | Adress-Mapping | IDLE Mode Ctrl. | Segm & Reassemb | Header Compress | Multicast Kontrolle |

| Transportspezifische Schicht (MAC specific Interfaces) | | | | | |
|---|---|---|---|---|---|
| GSM | Infrarot | W-CDMA | Bluetooth | HIPERLAN/2 | IEEE802.11 |

Radio Modem / Physikalische Schicht

FIG. 14

| UE | | NodeB | SRNC | |
|---|---|---|---|---|

**PDCP** ←--------------------------------→ **PDCP**

**RLC** ←--------------------------------→ **RLC**

**MAC** ←--------------------------------→ **MAC**

**PHY** ←--------------------------------→ **PHY**

**PHY** ←→ **PHY**

UE      NodeB      SRNC

# FIG. 15

| Application | | | | | | | | |
|---|---|---|---|---|---|---|---|---|
| E.g., IP, PPP, OSP | | **Socklets Server / Proxy / Handover** | | | **Socklets Server / Proxy / Handover** | | | E.g., IP, PPP, OSP |
| | | Relay | | | Relay | | | |
| PDCP | | PDCP | GTP-U | | GTP-U | GTP-U | | GTP-U |
| RLC | | RLC | UDP/IP | | UDP/IP | UDP/IP | | UDP/IP |
| MAC | | MAC | AAL5 | | AAL5 | L2 | | L2 |
| L1 | | L1 | ATM | | ATM | L1 | | L1 |

MS     Uu     UTRAN     Iu-PS     3G-SGSN     Gn     3G-GGSN     Gi